# EUROPEAN PATENT APPLICATION

(11) **EP 3 133 854 A1**
(43) Date of publication of application: **22.02.2017**
(21) Application number: 14889579.0
(22) Date of filing: 22.10.2014
(51) Int. Cl.: H04W 16/10

(54) **SPECTRUM MANAGEMENT METHOD, DEVICE, AND SYSTEM, AND COMPUTER STORAGE MEDIUM**

(30) Priority: 17.04.2014 CN 201410155209
(71) Applicant: ZTE Corporation, Shenzhen, Guangdong 518057 (CN)
(72) Inventor: LIU, Xing, Shenzhen Guangdong 518057 (CN); LI, Yan, Shenzhen Guangdong 518057 (CN); WANG, Bin, Shenzhen Guangdong 518057 (CN)
(74) Representative: Lavoix
(86) International application number: PCT/CN2014/089210
(87) International publication number: WO 2015/158124

(57) **Abstract**

The embodiments of the disclosure disclose a spectrum management method, device and system, and a computer storage medium. The method may comprise: a configuration node clusters a communication station according to a division rule; the configuration node configures a corresponding initial spectrum parameter for the communication station; and the configuration node sends the initial spectrum parameter and a clustering result.

## Description

### TECHNICAL FIELD

The disclosure relates to the technical field of wireless communications, and in particular to a spectrum management method, device and system, and a computer storage medium.

### BACKGROUND

As a radio communication technology progresses unceasingly, various radio communication services emerge greatly. Radio spectrum resources, from which radio communication services depend, are limited, and the radio spectrum resources present an extremely tense situation in view of continuously increased bandwidth demands of people. However, under a traditional fixed spectrum allocation mode, the utilization rate of spectrum resources is not high, and a cognitive radio communication technology breaks a fixed spectrum allocation system in the traditional sense, and dynamically allocates spectra between systems, thereby improving the utilization efficiency of spectra.

At present, modes, proposed in the industry, for dynamically allocating frequency band resources mainly include: a first solution: a solution of sharing dynamically allocated spectra between a plurality of Radio Access Technologies (RAT); a second solution: a solution of opportunistically occupying, by secondary systems, idle spectra of a primary system; and a third solution: a Licensed Shared Access (LSA) system solution. These solutions need to solve the problem about coexistence between devices in a system in a process of dynamically allocating spectrum resources, so as to prevent mutual interference between the devices.

Under the first solution among the above three solutions, each RAT device needs to satisfy coexistence thereof on dynamic spectrum resources of a Global System for Mobile communication (GSM) of an International Mobile Telecom (IMT); under the second solution, when devices of the plurality of secondary systems use idle spectrum resources of the primary system, a user equipment of each secondary system also needs to satisfy coexistence thereof on the idle spectrum resources of the primary system; and under the third solution, after an LSA controller allocates LSA spectrum resources to an area where an LSA system is located, all devices of the LSA system also need to satisfy coexistence thereof on the LSA spectrum resources. Obviously, coexistence of devices on relevant spectra is a key technology which must be considered for system implementation.

At present, two coexistence management modes, including a centralized spectrum management mode and a distributed negotiation mode, are proposed for solutions of coexistence between user equipments. In the centralized spectrum management mode, it is necessary for a centralized management node to manage coexistence between all user equipments in a unified manner, implementation of this management mode highly requiring the processing power of the centralized management node. In the distributed negotiation mode, all user equipments cooperatively apply spectrum resources by means of signalling interaction therebetween. Under this mode, it takes a long time to obtain a final judgement result, an area of influence is uncontrollable, and the system stability is poorer.

### SUMMARY

The embodiments of the disclosure are intended to provide a spectrum management method, device and system, and a computer storage medium, capable of solving the problem about mutual coexistence between devices in a system in a process of dynamically allocating spectrum resources and avoiding mutual interference between the devices.

To this end, the technical solutions of the disclosure are implemented as follows.

According to a first aspect, an embodiment of the disclosure provides a spectrum management method, which may comprise:
a configuration node clusters a communication station according to a division rule;
the configuration node configures a corresponding initial spectrum parameter for the communication station, the initial spectrum parameter satisfying a coexistence condition between the communication station and communication stations in other communication station clusters; and
the configuration node sends the initial spectrum parameter and a clustering result, the initial spectrum parameter and the clustering result being configured to determine, by the communication station, an own final spectrum parameter.

In another embodiment, the step that the configuration node configures the corresponding initial spectrum parameter for the communication station may comprise:
the configuration node configures the initial spectrum parameter satisfying the coexistence condition for the communication station according to a device parameter of the communication station and device parameters and spectrum use information of the communication stations in other communication station clusters.

In another embodiment, the step that the configuration node configures the corresponding initial spectrum parameter for the communication station may comprise:
the configuration node sends an available spectrum resource request to a spectrum management node, the available spectrum resource request being configured to determine, by the spectrum management node, an available spectrum and limit information about the available spectrum for the communication station;
the configuration node receives the available spectrum and the limit information about the available spectrum, determined by the spectrum management node; and
the configuration node configures the initial spectrum parameter satisfying the coexistence condition for the communication station according to the available spectrum, the limit information about the available spectrum, and the device parameters and spectrum use information of the communication stations in other communication station clusters; or the configuration node negotiates with other configuration nodes adjacent thereto according to the available spectrum, so as to obtain a new available spectrum and limit information about the new available spectrum within a range of the available spectrum, and then configures the initial spectrum parameter satisfying the coexistence condition for the communication station according to the new available spectrum, the limit information about the new available spectrum, and the device parameters and spectrum use information of the communication stations in other communication station clusters.

In another embodiment, after the configuration node sends the initial spectrum parameter and the clustering result, the method may further comprise:
the configuration node receives a configuration feedback message; and
the configuration node sends the configuration feedback message to the spectrum management node, the configuration feedback message including a final spectrum parameter of the communication station, and being configured to configure, by the configuration node, initial spectrum parameters for other communication stations subsequently and to provide, by the spectrum management node, the basis for subsequently determining available spectra.

In another embodiment, the coexistence condition may include: mutual non-interference between communication stations of different communication station clusters, or interference between communication stations of different communication station clusters within a set range.

In another embodiment, the clustering result may include at least one of the following information: an identifier of a cluster where the communication station is located, an identifier of a cluster head node of a cluster where the communication station is located, identifiers of other communication stations in a cluster where the communication station is located, locations of other communication stations in a cluster where the communication station is located, device types of other communication stations in a cluster where the communication station is located, a coexistence management mode between communication stations in a cluster where the communication station is located, and an allowed frequency range of communication stations in a cluster where the communication station is located, wherein the coexistence management mode between communication stations in a cluster where the communication station is located includes: one of a distributed negotiation mode between communication stations in a cluster where the communication station is located and a centralized management mode of a cluster head node of a cluster where the communication station is located.

According to a second aspect, an embodiment of the disclosure provides a spectrum management method, which may comprise:
a communication station sends an own device parameter to a configuration node, the device parameter being configured to cluster, by the configuration node, the communication station and to configure a corresponding initial spectrum parameter for the communication station;
the communication station receives the initial spectrum parameter and a clustering result, sent by the configuration node; and
the communication station determines an own final spectrum parameter according to the initial spectrum parameter and the clustering result.

In another embodiment, the clustering result may include at least one of the following information: an identifier of a cluster where the communication station is located, an identifier of a cluster head node of a cluster where the communication station is located, identifiers of other communication stations in a cluster where the communication station is located, locations of other communication stations in a cluster where the communication station is located, device types of other communication stations in a cluster where the communication station is located, a coexistence management mode between communication stations in a cluster where the communication station is located, and an allowed frequency range of communication stations in a cluster where the communication station is located, wherein the coexistence management mode between communication stations in a cluster where the communication station is located includes: one of a distributed negotiation mode between communication stations in a cluster where the communication station is located and a centralized management mode of a cluster head node of a cluster where the communication station is located.

In another embodiment, the step that the communication station determines the own final spectrum parameter according to the initial spectrum parameter and the clustering result may comprise:
when the coexistence management mode between communication stations in a cluster where the communication station is located is the distributed negotiation mode between communication stations in a cluster where the communication station is located, the communication station negotiates with other communication stations in this cluster according to the initial spectrum parameter and the clustering result, so as to obtain the own final spectrum parameter.

In another embodiment, the step that the communication station determines the own final spectrum parameter according to the initial spectrum parameter and the clustering result may comprise:
when the coexistence management mode between communication stations in a cluster where the communication station is located is the centralized management mode of a cluster head node of a cluster where the communication station is located, the communication station sends the initial spectrum parameter to a cluster head of the own cluster according to the clustering result, in order that the cluster head determines a corresponding final spectrum parameter for the communication station according to the initial spectrum parameter; and
the communication station receives the final spectrum parameter sent by the cluster head.

In another embodiment, after the communication station determines the own final spectrum parameter according to the initial spectrum parameter and the clustering result, the method may further include that:
the communication station sends a configuration feedback message to the configuration node.

According to a third aspect, an embodiment of the disclosure provides a configuration node. The configuration node may include: a clustering unit, a configuration unit and a sending unit, wherein
the clustering unit is configured to cluster a communication station according to a division rule;
the configuration unit is configured to configure a corresponding initial spectrum parameter for the communication station, the initial spectrum parameter satisfying a coexistence condition between the communication station and communication stations in other communication station clusters; and
the sending unit is configured to send the initial spectrum parameter and a clustering result, the initial spectrum parameter and the clustering result being configured to determine, by the communication station, an own final spectrum parameter.

In another embodiment, the configuration unit may be configured to configure the initial spectrum parameter satisfying the coexistence condition for the communication station according to a device parameter of the communication station and device parameters and spectrum use information of the communication stations in other communication station clusters.

In another embodiment, the configuration unit may include: a sending module, a receiving module and a configuration module, wherein
the sending module is configured to send an available spectrum resource request to a spectrum management node, the available spectrum resource request being configured to determine, by the spectrum management node, an available spectrum and limit information about the available spectrum for the communication station in at least one communication station cluster;
the receiving module is configured to receive the available spectrum and the limit information about the available spectrum, determined by the spectrum management node; and
the configuration module is configured to: configure the initial spectrum parameter satisfying the coexistence condition for the communication station according to the available spectrum, the limit information about the available spectrum, and the device parameters and spectrum use information of the communication stations in other communication station clusters;
or, negotiate with other configuration nodes adjacent thereto according to the available spectrum, so as to obtain a new available spectrum and limit information about the new available spectrum within a range of the available spectrum, and then configure the initial spectrum parameter satisfying the coexistence condition for the communication station according to the new available spectrum, the limit information about the new available spectrum, and the device parameters and spectrum use information of the communication stations in other communication station clusters.

In another embodiment, the receiving unit may be further configured to receive a configuration feedback message; and
the sending unit may be further configured to send the configuration feedback message to the spectrum management node, the configuration feedback message including a final spectrum parameter of the communication station, and being configured to configure, by the configuration node, initial spectrum parameters for other communication stations subsequently and to provide, by the spectrum management node, the basis for subsequently determining available spectra.

In another embodiment, the coexistence condition may include: mutual non-interference between communication stations of different communication station clusters, or interference between communication stations of different communication station clusters within a set range.

In another embodiment, the clustering result may include at least one of the following information: an identifier of a cluster where the communication station is located, an identifier of a cluster head node of a cluster where the communication station is located, identifiers of other communication stations in a cluster where the communication station is located, locations of other communication stations in a cluster where the communication station is located, device types of other communication stations in a cluster where the communication station is located, a coexistence management mode between communication stations in a cluster where the communication station is located, and an allowed frequency range of communication stations in a cluster where the communication station is located, wherein the coexistence management mode between communication stations in a cluster where the communication station is located includes: one of a distributed negotiation mode between communication stations in a cluster where the communication station is located and a centralized management mode of a cluster head node of a cluster where the communication station is located.

According to a fourth aspect, an embodiment of the disclosure provides a communication station. The communication station may include: a sending unit, a receiving unit and a determination unit, wherein
the sending unit is configured to send an own device parameter to a configuration node, the device parameter being configured to cluster, by the configuration node, the communication station and to configure a corresponding initial spectrum parameter for the communication station;
the receiving unit is configured to receive the initial spectrum parameter and a clustering result, sent by the configuration node; and
the determination unit is configured to determine an own final spectrum parameter according to the initial spectrum parameter and the clustering result.

In another embodiment, the clustering result may include at least one of the following information: an identifier of a cluster where the communication station is located, an identifier of a cluster head node of a cluster where the communication station is located, identifiers of other communication stations in a cluster where the communication station is located, locations of other communication stations in a cluster where the communication station is located, device types of other communication stations in a cluster where the communication station is located, a coexistence management mode between communication stations in a cluster where the communication station is located, and an allowed frequency range of communication stations in a cluster where the communication station is located, wherein the coexistence management mode between communication stations in a cluster where the communication station is located includes: one of a distributed negotiation mode between communication stations in a cluster where the communication station is located and a centralized management mode of a cluster head node of a cluster where the communication station is located.

In another embodiment, the determination unit may be configured to negotiate, when the coexistence management mode between communication stations in a cluster where the communication station is located is the distributed negotiation mode between communication stations in a cluster where the communication station is located, with other communication stations in this cluster according to the initial spectrum parameter and the clustering result, so as to obtain the own final spectrum parameter.

In another embodiment, the determination unit may be configured to send, when the coexistence management mode between communication stations in a cluster where the communication station is located is the centralized management mode of a cluster head node of a cluster where the communication station is located, the initial spectrum parameter to a cluster head node of the own cluster according to the clustering result, in order that the cluster head node determines a corresponding final spectrum parameter for the communication station according to the initial spectrum parameter; and
the receiving unit may be further configured to receive the final spectrum parameter sent by the cluster head node.

In another embodiment, the sending unit may be further configured to send a configuration feedback message to the configuration node.

According to a fifth aspect, an embodiment of the disclosure provides a spectrum management system, which may include a configuration node and a communication station, wherein
the configuration node is configured to: cluster a communication station according to a division rule; configure a corresponding initial spectrum parameter for the communication station, the initial spectrum parameter satisfying a coexistence condition between the communication station and communication stations in other communication station clusters; and send the initial spectrum parameter and a clustering result; and
the configuration station is configured to: send an own device parameter to a configuration node, the device parameter being configured to cluster, by the configuration node, the communication station and to configure a corresponding initial spectrum parameter for the communication station; receive the initial spectrum parameter and a clustering result, sent by the configuration node; and determine an own final spectrum parameter according to the initial spectrum parameter and the clustering result.

An embodiment of the disclosure also provides a computer storage medium. A computer executable instruction may be stored in the computer storage medium. The computer executable instruction may be configured to execute the spectrum management method, applied to a configuration node, according to the embodiment of the disclosure.

An embodiment of the disclosure also provides a computer storage medium. A computer executable instruction may be stored in the computer storage medium. The computer executable instruction may be configured to execute the spectrum management method, applied to a configuration station, according to the embodiment of the disclosure.

The embodiments of the disclosure provide a spectrum management method, device and system, and a computer storage medium. A configuration node clusters a communication station, and configures an initial spectrum parameter for the clustered communication station, such that the configuration station can self-determine a final spectrum parameter according to a clustering result and the initial spectrum parameter. The problem about mutual coexistence between devices in a system is solved, and mutual interference between the devices is avoided.

### BRIEF DESCRIPTION OF THE DRAWINGS

Fig. 1 is a diagram of a first application scenario according to an embodiment of the disclosure;
Fig. 2 is a diagram of a second application scenario according to an embodiment of the disclosure;
Fig. 3 is a diagram of a third application scenario according to an embodiment of the disclosure;
Fig. 4 is a diagram of a spectrum management method according to an embodiment of the disclosure;
Fig. 5 is a diagram of a method for configuring, by a configuration node, a corresponding initial spectrum parameter for a communication station according to an embodiment of the disclosure;
Fig. 6 is a diagram of another spectrum management method according to an embodiment of the disclosure;
Fig. 7 is a diagram of a method for determining, by a configuration station, an own final spectrum parameter according to an initial spectrum parameter and a clustering result in accordance with a negotiation mode according to an embodiment of the disclosure;
Fig. 8 is a flowchart of a detailed embodiment for a first spectrum management method according to an embodiment of the disclosure;
Fig. 9 is a flowchart of a detailed embodiment for a second spectrum management method according to an embodiment of the disclosure;
Fig. 10A is a diagram of a specific process of configuring an initial spectrum parameter according to an embodiment of the disclosure;
Fig. 10B is a diagram of another specific process of configuring an initial spectrum parameter according to an embodiment of the disclosure;
Fig. 11 is a flowchart of a detailed embodiment for a third spectrum management method according to an embodiment of the disclosure;
Fig. 12 is a flowchart of a detailed embodiment for a fourth spectrum management method according to an embodiment of the disclosure;
Fig. 13 is a diagram of LSA spectrum information about an area where a communication station BS1 is located according to an embodiment of the disclosure;
Fig. 14A is a structural diagram of a configuration node according to an embodiment of the disclosure;
Fig. 14B is a structural diagram of another configuration node according to an embodiment of the disclosure;
Fig. 15 is a structural diagram of hardware of a configuration node according to an embodiment of the disclosure;
Fig. 16 is a structural diagram of a communication station according to an embodiment of the disclosure;
Fig. 17 is a structural diagram of hardware of a communication station according to an embodiment of the disclosure;
Fig. 18 is a structural diagram of a spectrum management system according to an embodiment of the disclosure;
Fig. 19 is a structural diagram of another spectrum management system according to an embodiment of the disclosure; and
Fig. 20 is a structural diagram of another spectrum management system according to an embodiment of the disclosure.

### DETAILED DESCRIPTION

The technical solutions in the embodiments of the disclosure will be clearly and completely described below in conjunction with the drawings in the embodiments of the disclosure.

In various embodiments of the disclosure, a configuration node groups and initially configures communication stations for which spectrum resources need to be dynamically allocated, such that the communication stations for which spectrum resources need to be dynamically allocated are configured with spectrum resources in more detail according to own grouping and initial configuration conditions, thereby finally obtaining spectrum parameters, solving the problem about coexistence between the communication stations, and avoiding interference between the communication stations.

Thus, the technical solutions of the embodiments of the disclosure can be applied to scenarios where spectrum resources are dynamically allocated for a plurality of communication stations. In order to perform exemplar illustration, three technical scenarios are enumerated in the embodiments of the disclosure and used to clearly illustrate the technical solutions of the embodiments of the disclosure, but it is not shown that the technical solutions of the embodiments of the disclosure are only applied to these three technical scenarios. These three technical scenarios are as follows.

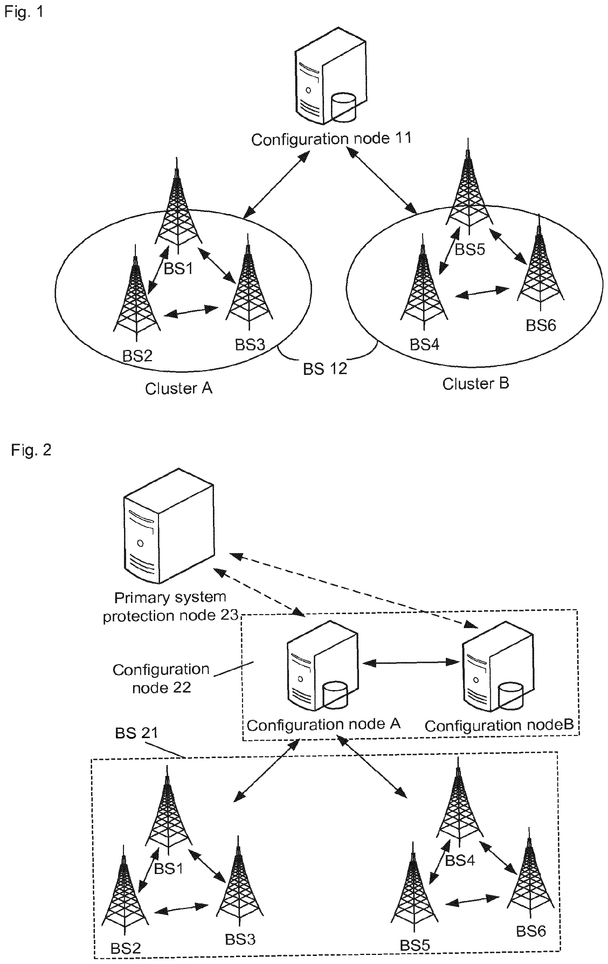

1. Fig. 1 is a diagram of a first application scenario according to an embodiment of the disclosure. Fig. 1 shows a structural diagram of a system for sharing dynamically allocated spectra between multiple RATs. In Fig. 1, different communication stations (BS) 12 correspond to different wireless access modes. A relation between the BSs 12 is equal, and specifically, the communication stations (BS) 12 in Fig. 1 may be base stations or access points under various wireless mobile communication network systems, or may be access points under Institute of Electrical and Electronics Engineers (IEEE) 802 systems such as a Wireless Local Area Network (WLAN), a Wireless Regional Area Network (WRAN) and a Worldwide Interoperability for Microwave Access (WiMax). A specific implementation of a configuration node 11 may be a network management device newly disposed in Fig. 1, or may refer to functional extension of an existing device in Fig. 1. In the embodiments of the disclosure, the configuration node 11 may be a Multi-Rat Coordinator (MRC).

2. Fig. 2 is a diagram of a second application scenario according to an embodiment of the disclosure. Fig. 2 shows a structural diagram of a system for opportunistically occupying, by secondary systems, idle spectra of a primary system. By taking a broadcast television system as an example, the overall utilization rate of spectrum resources of the broadcast television system is low, so that the broadcast television system can be regarded as a primary system while other non-broadcast television systems are regarded as secondary systems. Stations of these secondary systems can opportunistically occupy spectrum resources, unused in space and time, of the broadcast television system without harmful interference on the primary system. In Fig. 2, communication stations (BS) 21 are stations of the secondary systems opportunistically occupying the broadcast television system, which may, specifically, be base stations or access points under various wireless cellular network systems, or may be access points under IEEE802 systems such as a WLAN, a WRAN and a WiMax. A configuration node 22 refers to a functional entity in charge of configuration and management of spectrum resources of the secondary systems, which may, specifically, be any one of the following functional entities: a Spectrum Controller (SC), a Central Control Point (CCP), a reconfiguration management module, a reconfiguration function module and a reconfiguration entity. Besides, a primary system protection node 23 is further needed. The primary system protection node 23 is configured to be responsible for protecting the primary system and providing a primary system spectrum use condition for the communication stations (BS) 22 or the configuration node, thereby avoiding interference on the primary systems caused by the secondary system. Specifically, the primary system protection node may, specifically, be a Group Location DataBase (GLDB) of the primary system.

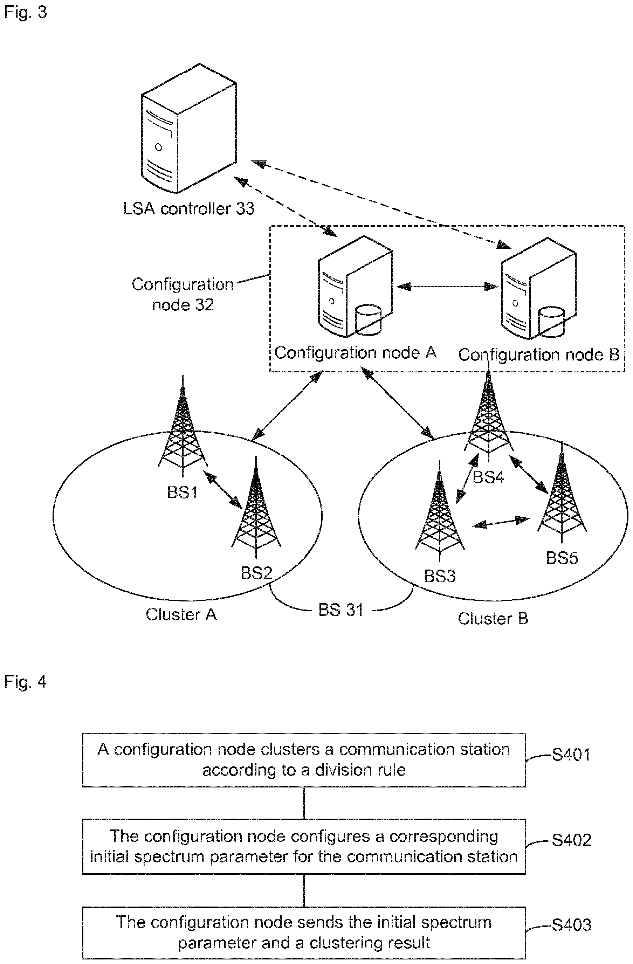

3. Fig. 3 is a diagram of a third application scenario according to an embodiment of the disclosure. Fig. 3 shows a structural diagram of a system for sharing an LSA spectrum resource. Understandably, an LSA mechanism may include an LSA licensed system and an LSA system, wherein the LSA licensed system and the LSA system share an identical spectrum resource. The spectrum resource shared by the LSA licensed system and the LSA system is an LSA spectrum resource. The LSA licensed system refers to an actual licensed user of the LSA spectrum resource, and can be understood as an actual owner of the LSA spectrum resource. The LSA system refers to a user which is licensed by a supervision mechanism and can be understood as a user sharing the LSA spectrum resource with the LSA licensed system. In Fig. 3, communication stations (BS) 31 may be communication stations of the LSA system, and may, specifically, be base stations or access points under various wireless mobile communication network systems, or may be access points under IEEE802 systems such as a WLAN, a WRAN and a WiMax. A configuration node 32 may be a functional entity constituted by at least one specific BS in all the BSs 31. Besides, an LSA controller 33 is further needed, and is in charge of providing, for the configuration node, LSA spectrum resource use conditions of the LSA licensed system in an area and protection requirement information about the LSA licensed system.

From the application scenarios shown in Fig. 2 and Fig. 3, it can be seen that the primary system protection node 23 and the LSA controller 33 are responsible to the primary system and the LSA licensed system in the respective scenarios, and are in charge of providing, for the communication stations BS or the configuration node governed by the primary system and the LSA licensed system, LSA spectrum resource use conditions of the primary system or the LSA licensed system, idle or shared spectra at locations of the communication stations BS, and limit information on each idle or shared spectrum. It is important to note that in the embodiments of the disclosure, spectra can be limited optionally by limiting power, phase, transmitting frequency or the like of a transmitting signal, which will not be specifically limited in the embodiment. In the following descriptions, if there are no special illustrations, it will be considered that the spectra are limited by limiting the power of the transmitting signal. In the scenarios shown in Fig. 2 and Fig. 3, the primary system protection node 23 and the LSA controller 33 can serve as management devices, for spectrum resources, of the primary system and the LSA licensed system, respectively. In the embodiments of the disclosure, if there are no special illustrations, the primary system protection node and the LSA controller are collectively referred to as spectrum management nodes.

Fig. 4 shows a spectrum management method according to an embodiment of the disclosure. The method is applied to a configuration node. The method includes the steps as follows.

Step S401: a configuration node clusters a communication station according to a division rule.

Here, the division rule for clustering by the configuration node may be based on a device parameter of the communication station, such as a geographic location of the communication station, a supported frequency band range, a supported bandwidth, an RAT, an operator and a load level. The division rule for clustering by the configuration node may also be an own running state of the configuration node, such as a load statistical law of the configuration node, a user demand, quantity of currently configurable spectrum resources and an inter-station interference relationship. Understandably, in a network establishment process, the division rule is pre-set by an operator when setting a configuration node and then is saved in the configuration node, in order that the configuration node reads and uses the division rule subsequently, which will not be specifically limited in the embodiments of the disclosure.

It is important to note that the device parameter of the communication station not only can serve as the division rule for clustering, by the configuration node, the communication station, but also can serve as the basis for configuring, by the configuration node, a corresponding initial spectrum parameter for the communication station subsequently in Step S402. Specifically, before Step S401, the configuration node receives the device parameter sent by the communication station.

In practical application, the division rule is usually based on the geographic location of the communication station or the operator. Specifically, in the embodiments of the disclosure, except special illustrations, the technical solutions are illustrated by taking geographic location information about the communication station as the basis for the set division rule, which will be limited, however.

In another embodiment, after clustering the communication station, the configuration node will send clustering feedback information to the communication station. The clustering feedback information, serving as a communication station clustering result of the configuration node, may include at least one of the following information: an identifier of a cluster where the communication station is located, an identifier of a cluster head node of a cluster where the communication station is located, identifiers of other communication stations in a cluster where the communication station is located, locations of other communication stations in a cluster where the communication station is located, device types of other communication stations in a cluster where the communication station is located, a negotiation mode between communication stations in a cluster where the communication station is located, and an allowed frequency range of communication stations in a cluster where the communication station is located, wherein a coexistence management mode between communication stations in a cluster where the communication station is located includes: one of a distributed negotiation mode between communication stations in a cluster where the communication station is located and a centralized management mode of a cluster head node of a cluster where the communication station is located.

It is important to note that when the coexistence management mode between communication stations in a cluster where the communication station is located is the distributed negotiation mode between communication stations in a cluster where the communication station is located, after completely clustering the communication station, the configuration node will send clustering feedback information to other communication stations in the cluster where the communication station is located, wherein the clustering feedback information may include: an identifier of the communication station, the identifier of the communication station being configured to update, by the other communication stations in this cluster, own cluster information. A specific negotiation mode has been set in an establishment process of the whole network, which will not be limited in the embodiments of the disclosure.

Step S402: the configuration node configures a corresponding initial spectrum parameter for the communication station.

Here, the initial spectrum parameter satisfies a coexistence condition between the communication station and communication stations in other communication station clusters. The coexistence condition may include: mutual non-interference between communication stations of different communication station clusters, or interference between communication stations of different communication station clusters within a set range. It is important to note that the set coexistence condition can be selected by the configuration node according to the situation of the device parameter of the communication station. For example, when a frequency band interval between communication stations can avoid interference by means of frequency diversity, the coexistence condition is mutual non-interference between communication stations of different communication station clusters; and when a frequency band interval between communication stations cannot avoid interference by a single frequency diversity, the coexistence condition is interference between communication stations of different communication station clusters within a set range. Besides, similar to the above division rule, in a network establishment process, the coexistence condition is pre-set by an operator when setting a configuration node and then is saved in the configuration node, in order that the configuration node uses the coexistence condition directly and subsequently, which will not be specifically limited in the embodiments of the disclosure.

In another embodiment, in the system for sharing dynamically allocated spectra shown in Fig. 1, a specific mode of implementing Step S402 via the configuration node may refer to that: the configuration node may configure the initial spectrum parameter satisfying the coexistence condition for the communication station according to a device parameter of the communication station and device parameters and spectrum use information of communication stations in other communication station clusters. It is important to note that in the system shown in Fig. 1, the process of configuring the initial spectrum parameter may be implemented simultaneously in an implementation process of Step S401, and it is unnecessary to perform obvious time distinguishing.

Specifically, in the system for sharing dynamically allocated spectra, geographic locations between all communication stations is closer, so that the clustering division rule may be a load level of each communication station and a currently configurable spectrum resource. In the application scenario shown in Fig. 1, suppose currently configurable spectrum resources of communication stations BS1 to BS6 are 2320-2370MHz and 2300-2320MHz, the BS1, the BS2 and the BS3 can be set to be in a first cluster, and configurable spectrum ranges of the communication stations BS1, BS2 and BS3 in the cluster are configured as 2320-2370MHz. Moreover, the BS4, the BS5 and the BS6 can be set to be in a second cluster, and configurable spectrum ranges of the communication stations BS4, BS5 and BS6 in the cluster are configured as 2300-2320MHz, so that in a clustering process, a process of configuring an initial spectrum parameter satisfying the set coexistence condition for at least one communication station cluster is implemented, and configurable spectrum ranges of two clusters cannot interfere with each other in frequency, thereby satisfying the condition of mutual non-interference between communication stations of different communication station clusters in the set coexistence condition.

In another embodiment, in the system for opportunistically occupying, by secondary systems, idle spectra of a primary system and the system for sharing an LSA spectrum resource shown in Fig. 2 and Fig. 3, a specific mode of implementing Step S402 via the configuration node may specifically include the steps as follows.

Step S4021: the configuration node sends an available spectrum resource request to a spectrum management node,
wherein the available spectrum resource request is configured to determine, by the spectrum management node, an available spectrum and limit information about the available spectrum for the communication station.

In the embodiment, before Step S4021, the configuration node may first receive a spectrum access request sent by the communication station. The spectrum access request may further include a device parameter of the communication station, and the device parameter of the communication station may be at least one of the following parameters: location information, device type information, a device identifier, device RAT information and the like.

After receiving the spectrum access request, the configuration node sends an available spectrum resource request to the spectrum management node, wherein the available spectrum resource request may include location information and device type information about the communication station.

In the system for opportunistically occupying, by secondary systems, idle spectra of a primary system, the spectrum management node may serve as a GLDB of a primary system protection node, so after receiving the available spectrum resource request sent by the configuration node, the GLDB searches for a spectrum use situation of a primary system where the communication station is located according to the location information about the communication station, determines an available spectrum in conjunction with the device type information about the communication station, and limits the available spectrum of the communication station on each piece of spectrum information according to a primary system protection criterion. Specifically, in the embodiment, limiting the available spectrum of the communication station may be: limiting transmitting power of the available spectrum of the communication station. A specific implementation process is a conventional technical means of those skilled in the art, which will not be elaborated herein.

In another embodiment, in the system for sharing an LSA spectrum resource, the spectrum management node may be an LSA controller, so after receiving the available spectrum resource request sent by the configuration node, the LSA controller may search for a use situation of an LSA spectrum, licensed by an LSA licensed system, in an area where the communication station is located and a protection requirement of the LSA licensed system according to the location information about the communication station, and may generate an LSA spectrum, in conjunction with the device type information, and limit information about the LSA spectrum. A specific implementation process is a conventional technical means of those skilled in the art, which will not be elaborated herein.

Step S4022: the configuration node receives the available spectrum and the limit information about the available spectrum, determined by the spectrum management node.

Step S4023: the configuration node configures the initial spectrum parameter satisfying the coexistence condition for the communication station according to the available spectrum, the limit information about the available spectrum, and the device parameters and spectrum use information of the communication stations in the other communication station clusters; or the configuration node negotiates with other configuration nodes adjacent thereto according to the available spectrum, so as to obtain a new available spectrum and limit information about the new available spectrum within a range of the available spectrum, and then configures the initial spectrum parameter satisfying the coexistence condition for the communication station according to the new available spectrum, the limit information about the new available spectrum, and the device parameters and spectrum use information of the communication stations in the other communication station clusters.

In another embodiment, when there is one configuration node, more than one communication station cluster can be obtained by clustering of the configuration node usually. In this case, the configuration node needs to configure an initial spectrum parameter satisfying a set coexistence condition for a communication station in at least one communication station cluster in conjunction with a device parameter of the communication station and an interference situation between different communication station clusters on the basis of an available spectrum and limit information about the available spectrum, wherein the device parameter of the communication station is frequency band range information and bandwidth information supported by the communication station, preferably.

Specifically, identical to the coexistence condition in the above embodiment, the coexistence condition may be: mutual non-interference between communication stations of different communication station clusters, or interference between communication stations of different communication station clusters within a set range.

Satisfaction of the coexistence condition of mutual non-interference between communication stations of different communication station clusters has been described in the above embodiment, which will not be elaborated herein. The coexistence condition of interference between communication stations of different communication station clusters within a set range may be implemented by controlling transmitting power of communication stations of different communication station clusters under the medium frequency and bandwidth of an available spectrum in the embodiment, such that the communication stations of different communication station clusters are distinguished by means of the transmitting power under the conditions of the same frequency and bandwidth, thereby avoiding interference to communication stations of other clusters, which will not be specifically limited in the embodiments of the disclosure.

In another embodiment, when there are more than one configuration node, the configuration nodes negotiate with other configuration nodes adjacent thereto according to the available spectrum and the limit information about the available spectrum, so as to obtain a new available spectrum and limit information about the new available spectrum within a range of the available spectrum, and then configure the initial spectrum parameter satisfying the coexistence condition for the communication station in conjunction with a device parameter of the communication station and the interference situation between different communication station clusters on the basis of the new available spectrum and the limit information about the new available spectrum, wherein the device parameter of the communication station may be frequency band range information and bandwidth information supported by the communication station.

Step S403: the configuration node sends the initial spectrum parameter and a clustering result.

Here, the configuration node obtains the initial spectrum parameter and the clustering result, and then may send the initial spectrum parameter and the clustering result to the communication station, such that the communication station self-determines a corresponding final spectrum parameter according to the clustering result and the initial spectrum parameter.

It is important to note that in the embodiment, the clustering result may be independently sent after the configuration node implements Step S401, or may be sent together with the initial spectrum parameter after the configuration node implements Step S402, which will not be specifically limited in the embodiments of the disclosure.

An embodiment of the disclosure provides a spectrum management method. A configuration node clusters a communication station, and configures an initial spectrum parameter for the clustered communication station, such that the configuration station can self-determine a final spectrum parameter according to a clustering result and the initial spectrum parameter. The problem about mutual coexistence between devices in a system is solved, and mutual interference between the devices is avoided.

An embodiment of the disclosure also provides a computer storage medium. A computer executable instruction is stored in the computer storage medium. The computer executable instruction is configured to execute the spectrum management method, applied to a configuration node, according to the embodiment of the disclosure.

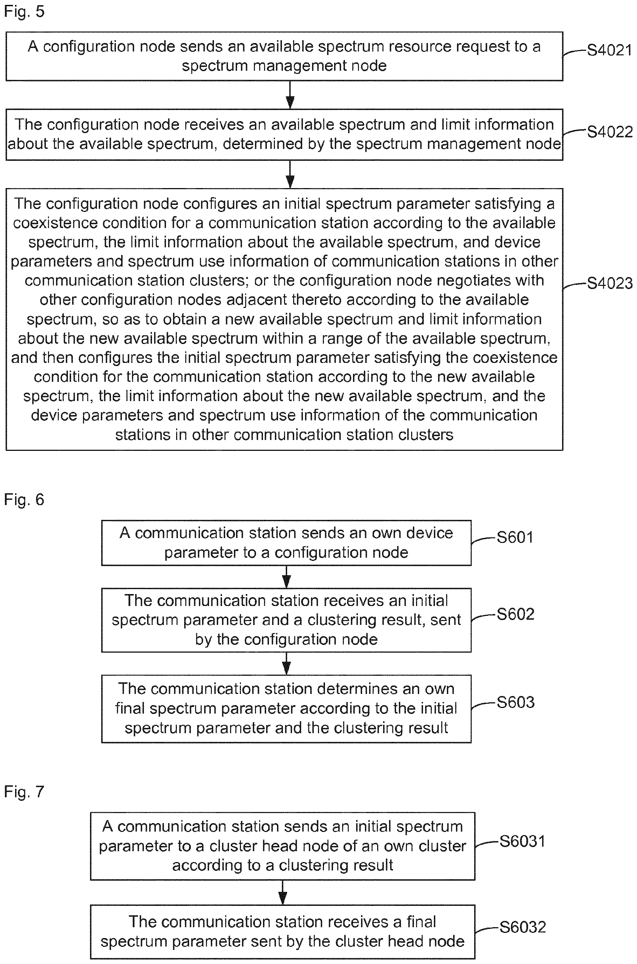

Fig. 6 shows another spectrum management method according to an embodiment of the disclosure. The spectrum management method is applied to a communication station, and may include the steps as follows.

Step S601: a communication station sends an own device parameter to a configuration node.

Here, the device parameter is configured to cluster, by the configuration node, the communication station and to configure a corresponding initial spectrum parameter for the communication station, wherein the specific processes of performing clustering and configuring an initial spectrum parameter by the configuration node have been described in the above embodiment, so as not to be elaborated herein.

Specifically, the communication station may send the own device parameter by packaging the own device parameter in a registration request in a process of registering the configuration node, or may send the device parameter by packaging the device parameter in a spectrum access request sent to the configuration node, which will not be specifically limited in the embodiments of the disclosure.

Step S602: the communication station receives the initial spectrum parameter and a clustering result, sent by the configuration node.

Here, the clustering operation of the configuration node may be implemented in the above registration process, and correspondingly, the clustering result may be sent by being encapsulated in a response message, with respect to the registration request, of the configuration node. Or, the clustering operation of the configuration node may be implemented according to the spectrum access request before the initial spectrum parameter is acquired, and correspondingly, the clustering result may be sent together with the initial spectrum parameter, which will not be specifically limited in the embodiment.

Specifically, the clustering result may include at least one of the following information: an identifier of a cluster where the communication station is located, an identifier of a cluster head node of a cluster where the communication station is located, identifiers of other communication stations in a cluster where the communication station is located, locations of other communication stations in a cluster where the communication station is located, device types of other communication stations in a cluster where the communication station is located, a coexistence management mode between communication stations in a cluster where the communication station is located, and an allowed frequency range of communication stations in a cluster where the communication station is located, wherein the coexistence management mode between communication stations in a cluster where the communication station is located includes: one of a distributed negotiation mode between communication stations in a cluster where the communication station is located and a centralized management mode of a cluster head node of a cluster where the communication station is located.

Step S603: the communication station determines an own final spectrum parameter according to the initial spectrum parameter and the clustering result.

Here, an intra-cluster negotiation mode of a cluster where the communication station is located in the clustering result may include the distributed negotiation mode between communication stations in a cluster where the communication station is located and the centralized management mode of a cluster head node of a cluster where the communication station is located, so that a specific negotiation mode has been completely set in an establishment process of the whole network, which will not be limited in the embodiments of the disclosure.

Correspondingly, when the coexistence management mode between communication stations in a cluster where the communication station is located is the distributed negotiation mode between communication stations in a cluster where the communication station is located, Step S603 can be specifically implemented as follows. The communication station negotiates with other communication stations in this cluster according to the initial spectrum parameter and the clustering result, so as to obtain an own final spectrum parameter.

Correspondingly, when the coexistence management mode between communication stations in a cluster where the communication station is located is the centralized management mode of a cluster head node of a cluster where the communication station is located, Fig. 7 is a diagram of a method for determining, by a configuration station, an own final spectrum parameter according to an initial spectrum parameter and a clustering result in accordance with a negotiation mode according to an embodiment of the disclosure. As shown in Fig. 7, Step S603 can be specifically implemented as follows.

Step S6031: the communication station sends the initial spectrum parameter to a cluster head node of the own cluster according to the clustering result.

Specifically, information about a cluster head node of a cluster where the communication station is located may be encapsulated in the clustering result sent to the communication station by the configuration node. Understandably, setting the cluster head node as the cluster head node of the same cluster may be performed in a process of clustering, by the configuration node, the communication station. The configuration node may also select a communication station with strongest signal transceiver ability, information processing ability and anti-interference ability from communication stations in the same cluster as a cluster head of this cluster.

Step S6031 is executed, in order that the cluster head node determines a corresponding final spectrum parameter for the communication station according to the initial spectrum parameter. The determination of the final spectrum parameter is implemented by satisfying a coexistence condition between intra-cluster communication stations.

In another embodiment, similar to the coexistence condition in the above embodiment, the coexistence condition may include: mutual non-interference between communication stations in the same cluster, or interference between communication stations in the same cluster within a set range.

Under the coexistence condition of mutual non-interference between communication stations in the same cluster, respective final spectrum parameters of communication stations in the same cluster may be implemented by dividing spectra into mutually exclusive frequency ranges.

Under the coexistence condition of interference between communication stations in the same cluster within a set range, respective final spectrum parameters of communication stations in the same cluster may be implemented by setting transmitting power under a frequency and a bandwidth, such that the communication stations in the same cluster can be distinguished under the condition of the same frequency and bandwidth by means of the transmitting power, thereby avoiding interference to other communication stations in the cluster.

Step S6032: the communication station receives the final spectrum parameter sent by the cluster head node.

Here, after receiving the final spectrum parameter, the communication station uses a spectrum resource according to the final spectrum parameter.

After Step S603, the communication station may also send a configuration feedback message to the configuration node. The configuration feedback message includes the corresponding final spectrum parameter of the communication station, such that the configuration node provides the basis for subsequently configuring initial spectrum parameters for other communication stations.

In another embodiment, when the set negotiation mode is a centralized negotiation mode, the communication station may also send a configuration feedback message to a cluster head node of the same cluster, such that the cluster head node provides the basis for subsequently configuring final spectrum parameters for other communication stations.

An embodiment of the disclosure provides another spectrum management method. A configuration station self-determines a final spectrum parameter according to an initial spectrum parameter acquired from a configuration node. The problem about mutual coexistence between devices in a system is solved, and mutual interference between the devices is avoided.

An embodiment of the disclosure also provides a computer storage medium. A computer executable instruction is stored in the computer storage medium. The computer executable instruction is configured to execute the spectrum management method, applied to a configuration station, according to the embodiment of the disclosure.

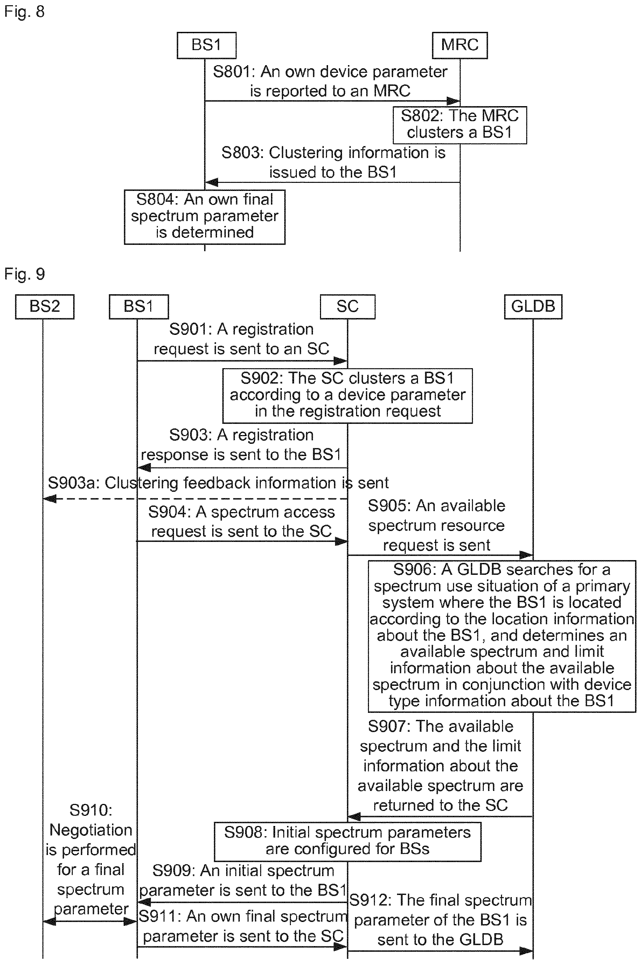

Fig. 8 shows a detailed embodiment for a first spectrum management method according to an embodiment of the disclosure. The embodiment is applied to the scenario shown in Fig. 1. Under the scenario, a configuration node may, specifically, be an MRC, and communication stations may comprise BS1 to BS6 in Fig. 1. The embodiment is illustrated with the BS1. Understandably, the technical solution of the embodiment can be applied to a situation where communication stations are BS2 to BS6. The flow of the embodiment is as follows.

Step S801: BS1 reports an own device parameter to an MRC.

Here, the device parameter is configured to cluster, by the MRC, the BS1. Specifically, the device parameter of the BS1 may include at least one of the following parameters: location information about the BS1, device type information, device RAT information, operator information, supported frequency band range information, supported bandwidth information and supported service information.

Step S802: the MRC clusters the BS1.

In the embodiment, the MRC clusters the BS1 in conjunction with a load level of a communication station and a configurable spectrum resource situation under a current spectrum environment such as 2320-2370MHz and 2300-2320MHz. Specifically, a clustering result in the embodiment is that: the BS1, a BS2 and a BS3 are in a cluster A, and a BS4, a BS5 and a BS6 are in a cluster B. Meanwhile, configurable spectrum ranges of communication stations in each cluster are planned as that: configurable spectrum ranges of the communication stations BS1, BS2 and BS3 in the cluster A are 2320-2370MHz, and configurable spectrum ranges of the communication stations BS4, BS5 and BS6 in the cluster B are 2300-2320MHz.

The division process achieves clustering of a communication station, configures a corresponding initial spectrum parameter for a communication station in a communication station cluster, and ensures that communication stations in different clusters are mutually exclusive in frequency, such that interference between the communication stations in different clusters can be avoided.

It is important to note that the basis for clustering of the configuration node in Step S802 may be other device parameters of each BS such as location information about each BS, a supported frequency band range, a supported bandwidth, an RAT and an operator, or may be an own running state of the configuration node such as a load statistical law of the configuration node, a user demand, quantity of currently configurable spectrum resources and an inter-station interference relationship. Then, an initial spectrum resource is configured by means of an inter-cluster frequency division mode.

Step S803: the MRC issues clustering information to the BS1.

Here, in the embodiment, the clustering information in Step S803 not only includes a clustering result such as an identifier of a cluster and identifiers of other communication stations in this cluster, but also includes an initial spectrum parameter such as a configurable spectrum range of each cluster.

Specifically, in the embodiment, the clustering information about the BS1 may include:
an identifier (A) of a cluster where the BS1 is located;
identifiers and types (BS2, fixed; BS3, fixed) of other communication stations in a cluster where the BS1 is located;
a coexistence management mode (distributed negotiation) between communication stations in a cluster where the BS1 is located; and
a spectrum use range (2320-2370MHz) of a cluster where the BS1 is located.

Thus, the BS1 can self-determine a final spectrum parameter according to the received clustering information issued by the MRC. It is important to note that the MRC may also send clustering information corresponding to the BS2 to the BS6 in accordance with the above process.

Step S804: the BS1 determines an own final spectrum parameter.

In the embodiment, the BS1 negotiates with the BS2 and the BS3 in the same cluster according to a distributed negotiation mode in the clustering information, wherein the BS1, the BS2 and the BS3 can determine a spectrum resource, such as BS1: 2320-2340MHz, BS2: 2340-2350MHz and BS3: 2350-2370MHz, used by each BS by means of mutual signalling interaction according to a conventional distributed negotiation algorithm such as a game theory. Besides, a transmitting power limit of each BS may also be calculated. Specifically, based on a location relationship between all communication stations, a propagation model and a used frequency, the allowed maximum transmitting power when there is no mutual interference is calculated to be: 40dBm, 35dBm and 40dBm. A specific process of calculating allowed maximum transmitting power is a common technical means in the field, which will not be elaborated herein.

Thus, respective final spectrum parameters of the BS1, the BS2 and the BS3 may be obtained in conjunction with spectrum resources used by the BS1, the BS2 and the BS3 and maximum transmitting power when the spectrum resources are used, as shown in Table 1.

**Table 1**

| Identifier of communication station | Final spectrum parameter | |
|---|---|---|
| | Used spectrum resource | Maximum transmitting power |
| BS1 | 2320-2340MHz | 40dBm |
| BS2 | 2340-2350MHz | 35dBm |
| BS3 | 2350-2370MHz | 40dBm |

Fig. 9 shows a detailed embodiment for a second spectrum management method according to an embodiment of the disclosure. The embodiment is applied to the scenario shown in Fig. 2. Under the scenario, the technical solution of the embodiment is illustrated with a communication station BS1, a configuration node may, specifically, be an SC, and a spectrum management node may, specifically, be a GLDB serving as a primary system protection node. In the embodiment, a distributed negotiation mode is selected as a negotiation mode between intra-cluster communication stations. The flow of the embodiment is as follows.

Step S901: BS1 sends a registration request to an SC.

Here, a device parameter of the BS1 is encapsulated in the registration request. The device parameter of the BS1 may include at least one of the following parameters: location information about the BS1, device type information, device RAT information, operator information, operator information, supported frequency band range information, supported bandwidth information and supported service information.

Step S902: the SC clusters the BS1 according to the device parameter in the registration request.

Here, the SC may cluster the BS1 by means of location information about a communication station, and put a BS2, close to the BS1 in physical location, into a cluster where the BS1 is located, such that a clustering result may be obtained. The clustering result of the BS1 may include:
an identifier (cluster A) of a cluster where the BS1 is located; and
an identifier (BS2) of another communication station in a cluster where the BS1 is located.

Step S903: the SC sends a registration response to the BS1.

Here, the SC may package the clustering result of the BS1 into the registration response, and then return the registration response to the BS1. A registration process from Step S901 to Step S903 may also be called as an initialization process or a BS1 service subscription process.

In another embodiment, when a distributed negotiation mode is selected as a negotiation mode between intra-cluster communication stations, as shown in dotted arrows in Fig. 9, the flow may further include Step S903a: the SC may send clustering feedback information to the BS2 in a cluster where the BS1 is located, wherein the clustering feedback information includes an identifier of the BS1, and may be configured to update, by the BS2, own cluster information.

Step S904: the BS1 sends a spectrum access request to the SC.

Here, the spectrum access request sent by the BS1 may include a device parameter of the BS1, the device parameter including, for example, location information, device type information, a device identifier or device RAT information and the like.

Step S905: the SC sends an available spectrum resource request to a GLDB.

The available spectrum resource request may, specifically, be an idle spectrum resource of the GLDB, wherein the idle spectrum resource may include location information and device type information about the BS1.

Step S906: the GLDB searches for a spectrum use situation of a primary system where the BS1 is located according to the location information about the BS1, and determines an available spectrum and limit information about the available spectrum in conjunction with the device type information about the BS1.

Here, the limit information about the available spectrum may include at least one of: a transmitting power limit, a bandwidth limit, a phase limit of a transmitting signal, an allowed maximum transmitting power limit and the like. Preferably, the allowed maximum transmitting power limit is adopted in the embodiment.

Specifically, the available spectrum of the BS1, obtained by the GLDB, may be shown in Table 2.

**Table 2**

| Location | Frequency MHz | Bandwidth MHz | Allowed maximum transmitting power |
|---|---|---|---|
| L1 | f1=530 | 8 | 40dBm |
| L1 | f2=560 | 8 | 30dBm |
| L1 | f3=480 | 8 | 40dBm |
| L1 | f4=710 | 8 | 30dBm |

Step S907: the GLDB may return the available spectrum and the limit information about the available spectrum to the SC.

Specifically, the GLDB may package the available spectrum and the limit information about the available spectrum, shown in Fig. 2, into an available spectrum resource response and then return it to the SC, such that the SC configures an initial spectrum parameter for the BS1 according to the available spectrum and the limit information about the available spectrum.

In another embodiment, the SC may execute S902 after this step. Understandably, the device parameter of the BS1 is needed for both clustering and configuration of an initial spectrum parameter, and clustering is the pre-condition of configuration of an initial spectrum parameter, so that the clustering process in Step S902 may be executed at any time before an initial spectrum parameter is configured for the BS1 and after the SC obtains the device parameter of the BS1. The embodiments of the disclosure do not make any limits to a specific time at which the SC executes Step S902.

Step S908: the SC configures an initial spectrum parameter for the BS1.

Here, a specific process of configuring an initial spectrum parameter may include two modes as follows.

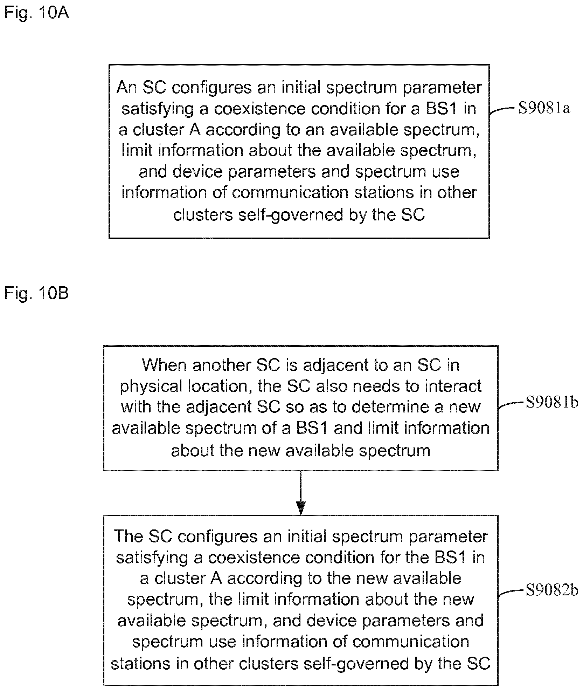

Mode 1: Fig. 10A is a diagram of a specific process of configuring an initial spectrum parameter according to an embodiment of the disclosure. As shown in Fig. 10A, the specific process of Step S908 may include Step S0981 a: the SC may configure an initial spectrum parameter satisfying a coexistence condition for the BS1 in the cluster A according to the available spectrum, the limit information about the available spectrum, and device parameters and spectrum use information of communication stations in other clusters self-governed by the SC.

Here, the coexistence condition may be mutual non-interference between communication stations of different communication station clusters, or interference between communication stations of different communication station clusters within a set range. A device parameter of a communication station is frequency band range information and bandwidth information supported by the communication station, preferably.

Specifically, the device parameters and spectrum use information of the communication stations in other clusters self-governed by the SC may be shown in Table 3.

**Table 3**

| Device | Cluster identifier | Location | Frequency MHz | Bandwidth MHz | Transmitting power |
|---|---|---|---|---|---|
| BS3 | Cluster B | L3 | f1=530 | 8 | 40dBm |
| BS4 | Cluster C | L4 | f2=560 | 8 | 30dBm |
| BS5 | Cluster B | L5 | f3=480 | 8 | 40dBm |
| BS6 | Cluster D | L6 | f4=710 | 8 | 30dBm |

The SC may calculate an initial spectrum parameter satisfying non-interference between the BS1 and the above four devices according to a location relationship between the available spectrum of the BS1 and the limit information about the available spectrum in Table 2 and four communication stations in Table 3, as shown in Table 4.

**Table 4**

| Location | Frequency MHz | Bandwidth MHz | Allowed maximum transmitting power |
|---|---|---|---|
| L1 | f1=530 | 8 | 20dBm |
| L1 | f2=560 | 8 | 0dBm |
| L1 | f3=480 | 8 | 40dBm |
| L1 | f4=710 | 8 | 30dBm |

The meaning of the initial spectrum parameter of the BS1 shown in Table 4 is: when the BS1 configures a parameter in accordance with requirements in Table 4, no interference to a primary system and communication stations in other clusters.

The other mode of the specific process of configuring an initial spectrum parameter is as follows. Fig. 10B is a diagram of another specific process of configuring an initial spectrum parameter according to an embodiment of the disclosure. As shown in Fig. 10B, the specific process of Step S908 may include:
Step S0981 b: When another SC is adjacent to the SC in physical location, the SC also needs to interact with the adjacent SC so as to determine a new available spectrum of the BS1 and limit information about the new available spectrum.

Specifically, the SC interacts with the adjacent SC according to the available spectrum of the BS1 and the limit information about the available spectrum, so as to obtain a new available spectrum of the BS1 and limit information about the new available spectrum within a range of the available spectrum. The new available spectrum and the limit information about the new available spectrum may satisfy a condition where the BS1 does not interfere to communication stations under the primary system and the adjacent SC. Specific forms of the new available spectrum and the limit information about the new available spectrum are shown in Table 5.

**Table 5**

| Location | Frequency MHz | Bandwidth MHz | Maximum allowed transmitting power |
|---|---|---|---|
| L1 | f1=530 | 8 | 20dBm |
| L1 | f2=560 | 8 | 30dBm |
| L1 | f3=480 | 8 | 40dBm |
| L1 | f4=710 | 8 | 20dBm |

Step S9082b: the SC may configure the initial spectrum parameter satisfying the coexistence condition for the BS1 in the cluster A according to the new available spectrum and the limit information about the new available spectrum shown in Table 5 and the device parameters and spectrum use information of communication stations in other clusters self-governed by the SC shown in Table 3. The specific process has been described in the above, and will not be elaborated here. The obtained initial spectrum parameter of the BS1 may be shown in Table 6.

**Table 6**

| Location | Frequency MHz | Bandwidth MHz | Maximum allowed transmitting power |
|---|---|---|---|
| L1 | f1=530 | 8 | 20dBm |
| L1 | f3=480 | 8 | 40dBm |
| L1 | f4=710 | 8 | 20dBm |

The meaning of the initial spectrum parameter of the BS1 shown in Table 6 is: when the BS1 configures a parameter in accordance with requirements in Table 6, no interference to communication stations in other clusters and communication stations under the primary system and the adjacent SC.

Step S909: the SC sends the initial spectrum parameter to the BS1.

Here, the initial spectrum parameter of the BS1 may be encapsulated into a spectrum access response and then return to the BS1.

Step S910: the BS1 and the BS2 negotiate for a final spectrum parameter.

Here, after receiving the initial spectrum parameter, the BS1 negotiates with another communication station BS2 in the same cluster so as to decide the final spectrum parameter.

Specifically, a spectrum used by the BS2 is f4, a location is L2, and transmitting power is 30dBm. When the BS1 and the BS2 do not interfere with each other, the transmitting power allowed by the BS1 is 10dBm. Thus, the optional final spectrum parameter of the BS1 may be shown in Table 7.

**Table 7**

| Location | Frequency MHz | Bandwidth MHz | Maximum allowed transmitting power |
|---|---|---|---|
| L1 | f1=530 | 8 | 20dBm |
| L1 | f3=480 | 8 | 40dBm |
| L1 | f4=710 | 8 | 10dBm |

Thereafter, the BS1 may determine to select f3 as a running spectrum according to a maximization criterion for allowed maximum transmitting power, and determine the transmitting power as 40dBm, so as to obtain the final spectrum parameter of the BS1.

Step S911: the BS1 sends the own final spectrum parameter to the SC.

Here, the SC saves the final spectrum parameter of the BS1, for considering inter-cluster coexistence during subsequent resource application for other communication stations.

In another embodiment, the embodiment may further include Step S912: the SC sends the final spectrum parameter of the BS1 to a GLDB, such that the GLDB takes the final spectrum parameter of the BS1 as consideration for cumulative interference of a primary system during subsequent resource application for other communication stations.

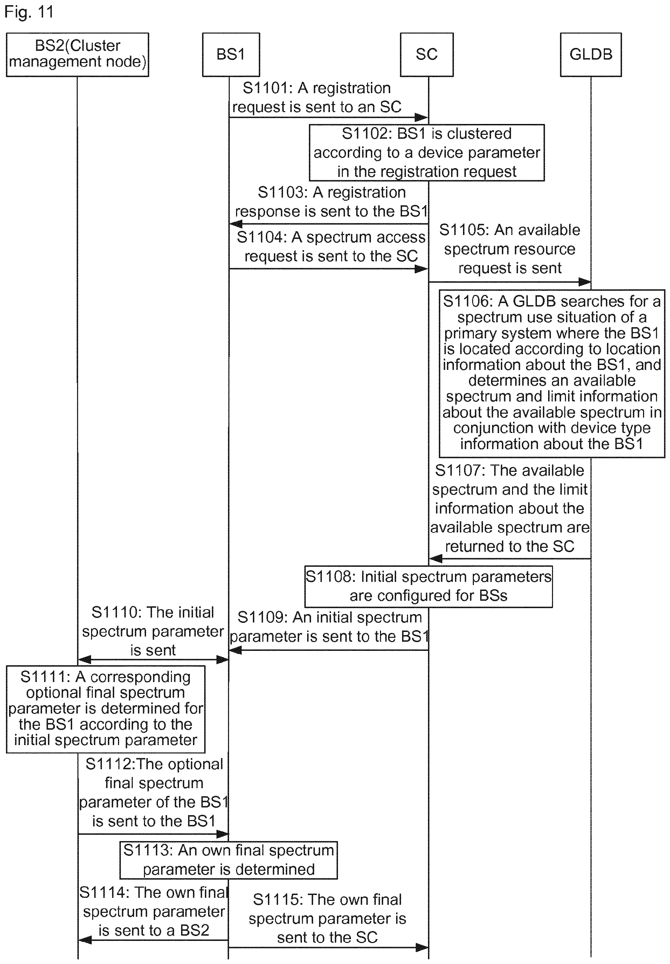

Fig. 11 is a detailed embodiment for a third spectrum management method according to an embodiment of the disclosure. The embodiment is applied to the scenario shown in Fig. 2. Under the scenario, the technical solution of the embodiment is illustrated with a communication station BS1, a configuration node may, specifically, be an SC, and a spectrum management node may, specifically, be a GLDB serving as a primary system protection node. In the embodiment, a centralized negotiation mode is selected as a negotiation mode between intra-cluster communication stations. The flow of the embodiment is as follows.
Step S1101: BS1 sends a registration request to an SC.
Step S1102: the SC clusters the BS1 according to a device parameter in the registration request.
Step S1103: the SC sends a registration response to the BS1.
Step S1104: the BS1 sends a spectrum access request to the SC.
Step S1105: the SC sends an available spectrum resource request to a GLDB.
Step S1106: the GLDB searches for a spectrum use situation of a primary system where the BS1 is located according to location information about the BS1, determines spectrum information in conjunction with device type information about the BS1, and limits an emission parameter of the BS1 on each piece of spectrum information according to a primary system protection criterion, thereby obtaining an available spectrum of the BS1 and limit information about the available spectrum.
Step S1107: the GLDB may return the available spectrum to the SC.
Step S1108: the SC configures initial spectrum parameters for BSs.
Step S1109: the SC sends an initial spectrum parameter to the BS1.

It is important to note that a specific process of configuring an initial spectrum parameter for the BS1, described from Step S1101 to Step S1109, is roughly the same as that as described from Step S901 to Step S909 in the embodiment shown in Fig. 9, and will not be elaborated in this embodiment.

The difference between this embodiment and the embodiment shown in Fig. 9 only lies in different negotiation modes set between intra-cluster communication stations, so that the flow of this embodiment distinguishes from that of the embodiment shown in Fig. 9 in that: firstly, a clustering result obtained after the SC executes Step S1102 may further include a cluster head node of a cluster A, set as a BS2 in this embodiment; and secondly, the process of determining an own final spectrum parameter by the BS1. Specifically,

Step S1110: the BS1 sends a resource configuration request to the BS2.

Here, the resource configuration request of the BS1 may include the initial spectrum parameter sent to the BS1 by the SC, as shown in Table 6.

Step S1111: the BS2 determines a corresponding optional final spectrum parameter for the BS1 according to the initial spectrum parameter.

Specifically, an optional final spectrum parameter of the BS1, calculated by the BS2 in conjunction with the initial spectrum parameter of the BS1 and spectrum use situations of other communication stations in the cluster, is shown in Table 8.

**Table 8**

| Location | Frequency MHz | Bandwidth MHz | Allowed maximum transmitting power |
|---|---|---|---|
| L1 | f3=480 | 8 | 40dBm |
| L1 | f4=710 | 8 | 10dBm |

Step S1112: the BS2 sends the optional final spectrum parameter of the BS1, shown in Table 8, to the BS1.

Here, the optional final spectrum parameter of the BS1 may be sent by being encapsulated into a resource configuration response sent by the BS2.

Step S1113: the BS1 determines an own final spectrum parameter.

Specifically, the BS1 may determine to select f3 as a running spectrum according to a maximization criterion for allowed maximum transmitting power, and determine transmitting power as 40dBm, so as to obtain the final spectrum parameter of the BS1.

Step S1114: the BS1 sends the own final spectrum parameter to the BS2.

Specifically, the BS2 saves the final spectrum parameter of the BS1, for considering inter-cluster coexistence during subsequent resource application for other communication stations in the same cluster.

Step S1115: the BS1 sends the own final spectrum parameter to the SC.

Here, a specific mode of this step is the same as illustrations of the embodiment shown in Fig. 9, and will not be elaborated herein. Moreover, an execution sequence of Step S1115 is not strictly distinguished from that of Step S1114. The embodiments of the disclosure do not specifically limit the execution sequence of the two steps.

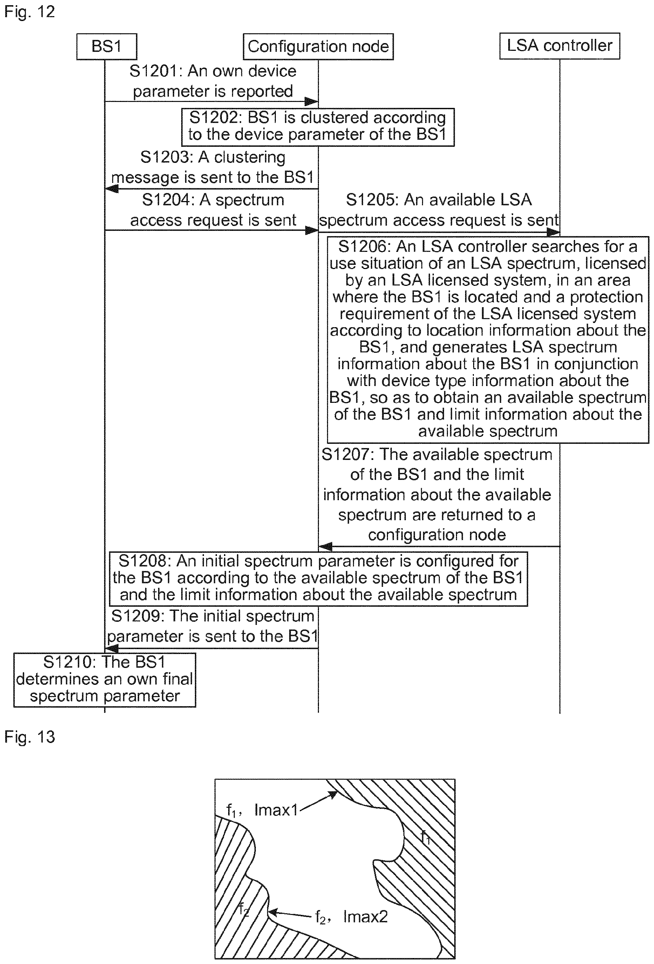

Fig. 12 is a detailed embodiment for a fourth spectrum management method according to an embodiment of the disclosure. The embodiment is applied to the scenario shown in Fig. 3. Under the scenario, the technical solution of the embodiment is illustrated with a communication station BS1, a configuration node may, specifically, be a functional entity constituted by one or more specific BSs among all BSs, and a spectrum management node may, specifically, be an LSA controller. In the embodiment, a negotiation mode between intra-cluster communication stations is not limited to a distributed negotiation mode or a centralized negotiation mode. The flow of the embodiment may include:
Step S1201: BS1 reports an own device parameter to a configuration node.

Here, the device parameter may be encapsulated into a registration request sent to an LSA controller by the BS1. Specifically, the device parameter of the BS1 may include: location information about the BS1, device type information, device RAT information, operator information, supported frequency band range information, supported bandwidth information and supported service information and the like.

Step S1202: the configuration node clusters the BS1 according to the device parameter of the BS1.

Step S1203: the configuration node sends a clustering result to the BS1.

Step S1204: the BS1 sends a spectrum access request to the configuration node.

Step S1205: the configuration node sends an available LSA spectrum access request to the LSA controller.

It is important to note that a specific implementation process from Step 1202 to Step 1205 is consistent with that as described in Step S902 to Step S905, and will not be elaborated herein.

Step S1206: the LSA controller searches for a use situation of an LSA spectrum, licensed by an LSA licensed system, in an area where the BS1 is located and a protection requirement of the LSA licensed system according to the location information about the BS1, and may generate LSA spectrum information about the BS1 in conjunction with the device type information about the BS1, so as to obtain an available spectrum of the BS1 and limit information about the available spectrum.

Specifically, Fig. 13 shows a diagram of LSA spectrum information about an area where a BS1 is located. The licensed system uses f1 and f2 at a shadow respectively, a coverage edge of the licensed system is shown as an outer contour of the shadow, allowable maximum interference values thereof being Imax1 and Imax2, respectively.

Step S1207: the LSA controller returns the available spectrum of the BS1 and the limit information about the available spectrum to the configuration node.

Step S1208: the configuration node configures an initial configuration parameter for the BS1 according to the available spectrum of the BS1 and the limit information about the available spectrum.

Here, the configuration node is substituted into a propagation model according to a location of the BS1 and the LSA spectrum information, and then the allowed maximum transmitting power of the BS1 on f1 and f2 under the protection requirement of the licensed system is calculated, namely P1=40dBm and P2=30dBm.

Thereafter, the configuration node inquires use situations of LSA spectra (f1, f2) in a list via BSs in other clusters subordinate to the configuration node, and the possible inter-cluster interference is shown in Table 9.

**Table 9**

| Device | Attached cluster | Location | Frequency MHz | Bandwidth MHz | Transmitting power |
|---|---|---|---|---|---|
| BS3 | Cluster B | L3 | f1 | 8 | 40dBm |
| BS4 | Cluster B | L4 | f2 | 8 | 30dBm |
| BS5 | Cluster B | L5 | f1 | 8 | 40dBm |

An initial spectrum parameter satisfying non-interference between the BS1 and the above four devices according to a location relationship between the BS1 and three potentially-interfered communication stations in Table 9, and a signal propagation model, as shown in Table 10.

**Table 10**

| Communication station | Frequency MHz | Bandwidth MHz | Allowed maximum transmitting power |
|---|---|---|---|
| BS1 | f1 | 8 | 20dBm |
| BS1 | f2 | 8 | 30dBm |

The meaning of the initial spectrum parameter of the BS1 shown in Table 10 is: when the BS1 configures a parameter in accordance with requirements in Table 10, no interference is caused to an LSA frequency band licensed system and communication stations in other clusters.

Step S1209: the configuration node sends the initial spectrum parameter to the BS1.

Here, the initial spectrum parameter of the BS1 may be encapsulated into a spectrum access response and then returned to the BS1.

Step S1210: the BS1 determines an own final spectrum parameter.

Here, specific implementation modes of determining, by the BS1, an own final spectrum parameter are different according to different set negotiation modes.

Understandably, when the set negotiation mode is a distributed negotiation mode, a specific implementation process of Step S1210 may be described as Step S910 to Step S912, and will not be elaborated herein. When the set negotiation mode is a centralized negotiation mode, a specific implementation process of Step S1210 may be described as Step S1110 to Step S1115, and will not be elaborated herein.

The descriptions for the detailed implementation flows of the embodiments of the disclosure in three specific scenarios illustrate a spectrum management method provided by the embodiments of the disclosure. A configuration node clusters a communication station, and configures an initial spectrum parameter for the clustered communication station, such that the configuration station can self-determine a final spectrum parameter according to a clustering result and the initial spectrum parameter. The problem about mutual coexistence between devices in a system is solved, and mutual interference between the devices is avoided.

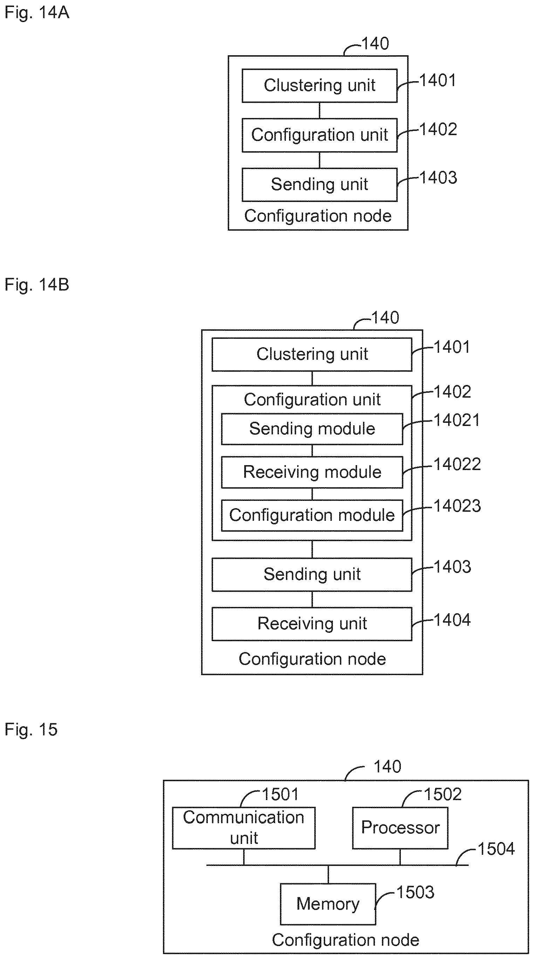

Fig. 14A shows a configuration node 140 according to an embodiment of the disclosure. The configuration node 140 includes a clustering unit 1401, a configuration unit 1402 and a sending unit 1403, wherein
the clustering unit 1401 is configured to cluster a communication station according to a division rule;
the configuration unit 1402 is configured to configure a corresponding initial spectrum parameter for the communication station, the initial spectrum parameter satisfying a coexistence condition between the communication station and communication stations in other communication station clusters; and
the sending unit 1403 is configured to send the initial spectrum parameter and a clustering result, the initial spectrum parameter and the clustering result being configured to self-determine, by the communication station, a corresponding final spectrum parameter.

Here, the division rule for clustering by the clustering unit 1401 may be a device parameter of the communication station, such as a geographic location of the communication station, a supported frequency band range, a supported bandwidth, an RAT, an operator and a load level. The division rule for clustering by the clustering unit 1401 may also be an own running state of the configuration node 140, such as a load statistical law of the configuration node 140, a user demand, quantity of currently configurable spectrum resources and an inter-station interference relationship. Understandably, in a network establishment process, the division rule is pre-set by an operator when setting the configuration node 140 and then is saved in the configuration node 140, in order that the configuration node 140 reads and uses the division rule subsequently, which will not be specifically limited in the embodiments of the disclosure.

It is important to note that the device parameter of the communication station not only can serve as the division rule for clustering, by the clustering unit 1401, the communication station, but also can serve as the basis for configuring, by the configuration unit 1402, a corresponding initial spectrum parameter for the communication station subsequently. Specifically, as shown in Fig. 14B, the configuration node 140 may obtain the device parameter of the communication station by receiving, via a receiving unit 1404, the device parameter sent by the communication station.

In practical application, the division rule of the clustering unit 1401 is usually the geographic location of the communication station or the operator. Specifically, in the embodiments of the disclosure, except special illustrations, the technical solutions are illustrated by taking geographic location information about the communication station as the basis for the set division rule, which will be limited, however.

In another embodiment, after the clustering unit 1401 completes clustering, the sending unit 1403 will send clustering feedback information to the communication station. The clustering feedback information serves as a communication station clustering result of the configuration node, and may include at least one of the following information: an identifier of a cluster where the communication station is located, an identifier of a cluster head node of a cluster where the communication station is located, identifiers of other communication stations in a cluster where the communication station is located, locations of other communication stations in a cluster where the communication station is located, device types of other communication stations in a cluster where the communication station is located, a coexistence management mode between communication stations in a cluster where the communication station is located, and an allowed frequency range of communication stations in a cluster where the communication station is located, wherein the coexistence management mode between communication stations in a cluster where the communication station is located includes: one of a distributed negotiation mode between communication stations in a cluster where the communication station is located and a centralized management mode of a cluster head node of a cluster where the communication station is located.

It is important to note that when the coexistence management mode between communication stations in a cluster where the communication station is located is the distributed negotiation mode between communication stations in a cluster where the communication station is located, after the clustering unit 1401 completely clusters the communication station, the sending unit 1403 will send clustering feedback information to other communication stations in the cluster where the communication station is located, wherein the clustering feedback information may include: an identifier of the communication station, the cluster information of the communication station being configured to update, by the other communication stations in this cluster, own cluster information. A specific negotiation mode has been set in an establishment process of the whole network, which will not be limited in the embodiments of the disclosure.

Here, the initial spectrum parameter satisfies a coexistence condition between the communication station and communication stations in other communication station clusters. The coexistence condition may include: mutual non-interference between communication stations of different communication station clusters, or interference between communication stations of different communication station clusters within a set range. It is important to note that the set coexistence condition can be selected by the configuration node according to the situation of the device parameter of the communication station. For example, when a frequency band interval between communication stations can avoid interference by means of frequency diversity, the coexistence condition is mutual non-interference between communication stations of different communication station clusters; and when a frequency band interval between communication stations cannot avoid interference by a single frequency diversity, the coexistence condition is interference between communication stations of different communication station clusters within a set range. Besides, similar to the above division rule, in a network establishment process, the coexistence condition is pre-set by an operator when setting the configuration node 140 and then is saved in the configuration node 140, in order that the configuration node 140 uses the coexistence condition directly and subsequently, which will not be specifically limited in the embodiments of the disclosure.

In another embodiment, in the system for sharing dynamically allocated spectra shown in Fig. 1, the configuration unit 1402 is configured to configure the initial spectrum parameter satisfying the coexistence condition for the communication station according to the device parameter of the communication station and device parameters and spectrum use information of communication stations in other communication station clusters.

In another embodiment, in the system for opportunistically occupying, by secondary systems, idle spectra of a primary system and the system for sharing an LSA spectrum resource shown in Fig. 2 and Fig. 3, as shown in Fig. 14B, the configuration unit 1402 may include: a sending module 14021, a receiving module 14022 and a configuration module 14023, wherein
the sending module 14021 is configured to send an available spectrum resource request to a spectrum management node;
the receiving module 14022 is configured to receive an available spectrum and limit information about the available spectrum, determined by the spectrum management node; and
the configuration module 14023 is configured to: configure the initial spectrum parameter satisfying the coexistence condition for the communication station according to the available spectrum, the limit information about the available spectrum, and the device parameters and spectrum use information of the communication stations in the other communication station clusters;
or, negotiate with other configuration nodes adjacent thereto according to the available spectrum, so as to obtain a new available spectrum and limit information about the new available spectrum within a range of the available spectrum, and then configure the initial spectrum parameter satisfying the coexistence condition for the communication station according to the new available spectrum, the limit information about the new available spectrum, and the device parameters and spectrum use information of the communication stations in other communication station clusters.

Specifically, the available spectrum resource request is configured to determine, by the spectrum management node, the available spectrum and the limit information about the available spectrum for the communication station.

In another embodiment, before the sending module 14021 sends the available spectrum resource request to the spectrum management node, the receiving module 14022 may be further configured to receive a spectrum access request sent by the communication station, and the spectrum access request may further include a device parameter of the communication station, such as location information, device type information, a device identifier and device RAT information.

After the receiving module 14022 receives the spectrum access request, the sending module 14021 sends an available spectrum resource request to the spectrum management node, wherein the available spectrum resource request may include location information and device type information about the communication station.

Here, in the system for opportunistically occupying, by secondary systems, idle spectra of a primary system, the spectrum management node may serve as a GLDB of a primary system protection node, so after receiving the available spectrum resource request sent by the configuration node, the GLDB searches for a spectrum use situation of a primary system where the communication station is located according to the location information about the communication station, determines an available spectrum in conjunction with the device type information about the communication station, and limits the available spectrum of the communication station on each piece of spectrum information according to a primary system protection criterion. In the embodiment, transmitting power of the available spectrum is limited. A specific implementation process is a conventional technical means for those skilled in the art, which will not be elaborated herein.

Here, in the system for sharing an LSA spectrum resource, the spectrum management node may be an LSA controller, so after receiving the available spectrum resource request sent by the configuration node, the LSA controller may search for a use situation of an LSA spectrum, licensed by an LSA licensed system, in an area where the communication station is located and a protection requirement of the LSA licensed system according to the location information about the communication station, and may generate an LSA spectrum, in conjunction with the device type information, and limit information about the LSA spectrum. A specific implementation process is a conventional technical means for those skilled in the art, which will not be elaborated herein.

Here, when there is one configuration node, after the clustering unit 1401 performs clustering, more than one communication station cluster can be obtained usually. In this case, the configuration module 14023 needs to configure an initial spectrum parameter satisfying the set coexistence condition for the communication station in conjunction with the device parameter of the communication station and an interference situation between different communication station clusters on the basis of an available spectrum and limit information about the available spectrum, wherein the device parameter of the communication station is frequency band range information and bandwidth information supported by the communication station, preferably.

Specifically, identical to the coexistence condition in the above embodiment, the coexistence condition may be: mutual non-interference between communication stations of different communication station clusters, or interference between communication stations of different communication station clusters within a set range.

Satisfaction of the coexistence condition of mutual non-interference between communication stations of different communication station clusters has been described in the above embodiment, which will not be elaborated herein. The coexistence condition of interference between communication stations of different communication station clusters within a set range may be implemented by controlling transmitting power of communication stations of different communication station clusters under the medium frequency and bandwidth of an available spectrum in the embodiment, such that the communication stations of different communication station clusters are distinguished by means of the transmitting power under the conditions of the same frequency and bandwidth, thereby avoiding interference to communication stations of other clusters, which will not be specifically limited in the embodiments of the disclosure.

In another embodiment, when there are more than one configuration node, the configuration module 14023 negotiates with other configuration nodes adjacent thereto according to the available spectrum and the limit information about the available spectrum, so as to obtain a new available spectrum and limit information about the new available spectrum within a range of the available spectrum, and then configures the initial spectrum parameter satisfying the coexistence condition for the communication station in conjunction with the device parameter of the communication station and the interference situation between different communication station clusters on the basis of the new available spectrum and the limit information about the new available spectrum, wherein the device parameter of the communication station may be frequency band range information and bandwidth information supported by the communication station, preferably.

Here, after the initial spectrum parameter and the clustering result are obtained, the sending unit 1403 may send the initial spectrum parameter and the clustering result to the communication station, such that the communication station self-determines a corresponding final spectrum parameter according to the clustering result and the initial spectrum parameter.

It is important to note that in the embodiment, the clustering result may be independently sent by the sending unit 1403 after the clustering unit 1401 completes clustering, or may be sent together with the initial spectrum parameter by the sending unit 1403 after the configuration unit 1402 obtains the initial spectrum parameter, which will not be specifically limited in the embodiments of the disclosure.

An embodiment of the disclosure provides a configuration node 140. The configuration node 140 clusters a communication station, and configures an initial spectrum parameter for the clustered communication station, such that the configuration station can self-determine a final spectrum parameter according to a clustering result and the initial spectrum parameter. The problem about mutual coexistence between devices in a system is solved, and mutual interference between the devices is avoided.

In conjunction with the embodiments shown in Fig. 14A and Fig. 14B, Fig. 15 shows another configuration node 140 according to an embodiment of the disclosure. The configuration node 140 may include at least one communication unit 1501, a processor 1502, a memory 1503 and a bus 1504. The at least one communication unit 1501, the processor 1502 and the memory 1503 are connected via the bus 1504 and complete mutual communication.

The bus 1504 may be an Industry Standard Architecture (ISA) bus, a Peripheral Component (PCI) bus or an Extended Industry Standard Architecture (EISA) bus. The bus 1504 may be divided into an address bus, a data bus, a control bus and the like. In order to facilitate expression, in Fig. 15, the bus is expressed by using only one heavy line, but it is not shown that there is only one bus or buses of one type, wherein
the communication unit 1501 may be an antenna having electromagnetic wave receiving and transmitting functions.

The memory 1503 is configured to store an executable program code, the program code including a computer operation instruction. The memory 1503 probably contains a high-speed Random Access Memory (RAM), or probably further includes a non-volatile memory such as at least one disk memory. A storage device stores an operating system and application programs. The storage device is configured to implement the program code of the embodiments of the disclosure. The operating system is configured to control and implement a processing function executed by a processing unit. The application programs contain program codes such as word processing software and email software.

The processor 1502 may be a Central Processing Unit (CPU), or an Application Specific Integrated Circuit (ASIC), or is at least one integrated circuit configured to execute the embodiments of the disclosure.

The communication unit 1501 is configured to communicate with an external device.

The processor 1502 is configured to: cluster a communication station according to a division rule; configure a corresponding initial spectrum parameter for the communication station, the initial spectrum parameter satisfying a coexistence condition between the communication station and communication stations in other communication station clusters; and send the initial spectrum parameter and a clustering result by means of the communication unit 1501, the initial spectrum parameter and the clustering result being configured to determine, by the communication station, an own final spectrum parameter.

In another embodiment, the processor 1502 is configured to configure the initial spectrum parameter satisfying the coexistence condition for the communication station according to a device parameter of the communication station and device parameters and spectrum use information of the communication stations in other communication station clusters. Specifically, the coexistence condition includes: mutual non-interference between communication stations of different communication station clusters, or interference between communication stations of different communication station clusters within a set range.

In another embodiment, the processor 1502 is configured to: send an available spectrum resource request to a spectrum management node by means of the communication unit 1501, the available spectrum resource request being configured to determine, by the spectrum management node, an available spectrum and limit information about the available spectrum for the communication station in at least one communication station cluster; receive the available spectrum and the limit information about the available spectrum, determined by the spectrum management node, by means of the communication unit 1501; configure the initial spectrum parameter satisfying the coexistence condition for the communication station according to the available spectrum, the limit information about the available spectrum, and the device parameters and spectrum use information of the communication stations in other communication station clusters; or, negotiate with other configuration nodes adjacent thereto according to the available spectrum, so as to obtain a new available spectrum and limit information about the new available spectrum within a range of the available spectrum, and then configure the initial spectrum parameter satisfying the coexistence condition for the communication station according to the new available spectrum, the limit information about the new available spectrum, and the device parameters and spectrum use information of the communication stations in other communication station clusters.

In another embodiment, the processor 1502 may be further configured to: receive a configuration feedback message by means of the communication unit 1501; and send the configuration feedback message to the spectrum management node by means of the communication unit 1501, the configuration feedback message including a corresponding final spectrum parameter of the communication station, and being configured to configure, by the configuration node, initial spectrum parameters for other communication stations subsequently and to provide, by the spectrum management node, the basis for subsequently determining available spectra.

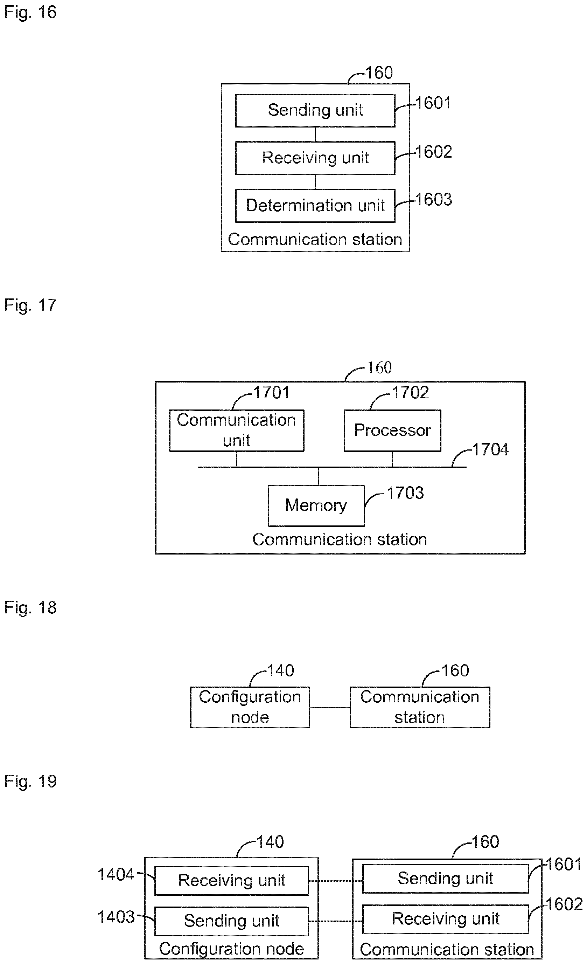

Fig. 16 shows a communication station 160 according to an embodiment of the disclosure. The communication station 160 includes a sending unit 1601, a receiving unit 1602 and a determination unit 1603, wherein
the sending unit 1601 is configured to send an own device parameter to a configuration node, the device parameter being configured to cluster, by the configuration node, the communication station and to configure a corresponding initial spectrum parameter for the communication station;
the receiving unit 1602 is configured to receive the initial spectrum parameter and a clustering result, sent by the configuration node; and
the determination unit 1603 is configured to determine an own final spectrum parameter according to the initial spectrum parameter and the clustering result.

Here, the device parameter is configured to cluster, by the configuration node, the communication station 160 and to configure a corresponding initial spectrum parameter for the communication station, wherein the specific processes of performing clustering and configuring an initial spectrum parameter by the configuration node have been described in the above embodiment, so as not to be elaborated herein.

Specifically, the sending unit 1601 may send the device parameter by packaging the device parameter in a registration request in a registration process to a configuration node, or the sending unit 1601 may send the device parameter by packaging the device parameter in a spectrum access request sent to the configuration node, which will not be specifically limited in the embodiments of the disclosure.

Specifically, the clustering result may include at least one of the following information: an identifier of a cluster where the communication station 160 is located, an identifier of a cluster head node of a cluster where the communication station 160 is located, identifiers of other communication stations in a cluster where the communication station 160 is located, locations of other communication stations in a cluster where the communication station 160 is located, device types of other communication stations in a cluster where the communication station 160 is located, a coexistence management mode between communication stations in a cluster where the communication station 160 is located, and an allowed frequency range of communication stations in a cluster where the communication station 160 is located, wherein the coexistence management mode between communication stations in a cluster where the communication station 160 is located includes: one of a distributed negotiation mode between communication stations in a cluster where the communication station is located and a centralized management mode of a cluster head node of a cluster where the communication station is located. A specific negotiation mode has been completely set in an establishment process of the whole network, which will not be limited in the embodiments of the disclosure.

Correspondingly, when the coexistence management mode between communication stations in a cluster where the communication station is located is the distributed negotiation mode between communication stations in a cluster where the communication station is located, the determination unit 1603 is configured to negotiate with other communication stations in this cluster according to the initial spectrum parameter and the clustering result, so as to obtain an own final spectrum parameter.

Correspondingly, when the coexistence management mode between communication stations in a cluster where the communication station is located is the centralized management mode of a cluster head node of a cluster where the communication station is located, the determination unit 1603 is configured to send the initial spectrum parameter to a cluster head node of the own cluster according to the clustering result, and receive the final spectrum parameter sent by the cluster head node.

Specifically, information about the cluster head node of the same cluster is located may be encapsulated in the clustering result sent by the configuration node. This process is configured to determine, by the cluster head node, a corresponding final spectrum parameter for the communication station according to the initial spectrum parameter. The determination of the final spectrum parameter is implemented by satisfying a coexistence condition set between intra-cluster communication stations.

In another embodiment, similar to the coexistence condition in the above embodiment, the set coexistence condition may be mutual non-interference between communication stations in the same cluster, or interference between communication stations in the same cluster within a set range.

Under the coexistence condition of mutual non-interference between communication stations in the same cluster, respective final spectrum parameters of communication stations in the same cluster may be implemented by dividing spectra into mutually exclusive frequency ranges.

Under the coexistence condition of interference between communication stations in the same cluster within a set range, respective final spectrum parameters of communication stations in the same cluster may be implemented by setting transmitting power under a frequency and a bandwidth, such that the communication stations in the same cluster can be distinguished under the condition of the same frequency and bandwidth by means of the transmitting power, thereby avoiding interference to other communication stations in the cluster.

In the embodiment, after receiving the final spectrum parameter, the communication station 160 uses a spectrum resource according to the final spectrum parameter.

In another embodiment, the sending unit 1601 is further configured to: send a configuration feedback message to the configuration node, the configuration feedback message including the corresponding final spectrum parameter of the communication station, such that the configuration node provides the basis for subsequently configuring initial spectrum parameters for other communication stations.

In another embodiment, when the set negotiation mode is a centralized negotiation mode, the sending station 1601 is further configured to send a configuration feedback message to a cluster head node of the same cluster, such that the cluster head node provides the basis for subsequently configuring final spectrum parameters for other communication stations.

An embodiment of the disclosure provides a communication station 160. The configuration station 160 self-determines a final spectrum parameter according to an initial spectrum parameter acquired from a configuration node. The problem about mutual coexistence between devices in a system is solved, and mutual interference between the devices is avoided.

In conjunction with the embodiment shown in Fig. 16, Fig. 17 is a structural diagram of hardware of a communication station 160 according to an embodiment of the disclosure. The configuration node 160 may include at least one communication unit 1701, a processor 1702, a memory 1703 and a bus 1704. The at least one communication unit 1701, the processor 1702 and the memory 1703 are connected via the bus 1704 and complete mutual communication.

The bus 1704 may be an ISA bus, a PCI bus or an EISA bus. The bus 1704 may be divided into an address bus, a data bus, a control bus and the like. In order to facilitate expression, in Fig. 17, the bus is expressed by using only one heavy line, but it is not shown that there is only one bus or buses of one type, wherein
the communication unit 1701 may be an antenna having electromagnetic wave receiving and transmitting functions.

The memory 1703 is configured to store an executable program code, the program code including a computer operation instruction. The memory 1703 probably contains a high-speed RAM, or probably further includes a non-volatile memory such as at least one disk memory. A storage device stores an operating system and application programs. The storage device is configured to implement the program code of the embodiments of the disclosure. The operating system is configured to control and implement a processing function executed by a processing unit. The application programs contain program codes such as word processing software and email software.

The processor 1702 may be a CPU, or an ASIC, or is at least one integrated circuit configured to execute the embodiments of the disclosure.

The communication unit 1701 is configured to communicate with an external device.

The processor 1702 may be configured to: send an own device parameter to a configuration node by means of the communication 1701, the device parameter being configured to cluster, by the configuration node, the communication station and to configure a corresponding initial spectrum parameter for the communication station; receive the initial spectrum parameter and a clustering result, sent by the configuration node, by means of the communication 1701; and determine an own final spectrum parameter according to the initial spectrum parameter and the clustering result.

In another embodiment, the processor 1702 may be configured to negotiate with other communication stations in this cluster according to the initial spectrum parameter and the clustering result by means of the communication 1701, so as to obtain the own final spectrum parameter.

In another embodiment, the processor 1702 may be configured to: send the initial spectrum parameter to a cluster head node of the own cluster according to the clustering result, in order that the cluster head node determines a corresponding final spectrum parameter for the communication station according to the initial spectrum parameter; and receive the final spectrum parameter sent by the cluster head node by means of the communication 1701.

In another embodiment, the processor 1702 may be further configured to send a configuration feedback message to the configuration node by means of the communication 1701.

Fig. 18 is a spectrum management system according to an embodiment of the disclosure. The spectrum management system includes a configuration node 140 and a communication station 160, wherein the configuration node 140 is configured to configure a initial spectrum parameter for the communication station according to a device parameter of the communication station;
the configuration station 160 is configured to determine an own final spectrum parameter according to the initial spectrum parameter.

Specifically, the configuration node 140 may be the configuration node according to any one of the above embodiments.

The configuration station 160 may be the configuration station according to any one of the above embodiments.

On the basis of the embodiments shown in Fig. 14B and Fig. 16, as shown in Fig. 19, the receiving unit 1404 of the configuration node 140 is connected to the sending unit 1601 of the communication station 160 by means of spatial electromagnetic propagation. Correspondingly, the sending unit 1403 of the configuration node 140 is connected to the receiving unit 1602 of the communication station 160 by means of spatial electromagnetic propagation. In Fig. 19, spatial electromagnetic propagation therebetween is expressed by means of dotted lines.

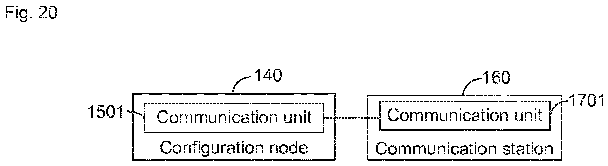

On the basis of the embodiments shown in Fig. 15 and Fig. 17, as shown in Fig. 20, the communication unit 1501 of the configuration node 140 is connected to the communication unit 1701 of the communication station 160 by means of spatial electromagnetic propagation. In Fig. 20, spatial electromagnetic propagation therebetween is expressed by means of dotted lines.

An embodiment of the disclosure provides a spectrum management system. A configuration node 140 clusters a communication station 160, and configures an initial spectrum parameter for the clustered communication station 160, such that the configuration station 160 can self-determine a final spectrum parameter according to a clustering result and the initial spectrum parameter. The problem about mutual coexistence between devices in a system is solved, and mutual interference between the devices is avoided.

Those skilled in the art shall understand that the embodiments of the disclosure may be provided as a method, a system or a computer program product. Thus, forms of hardware embodiments, software embodiments or embodiments integrating software and hardware may be adopted in the disclosure. Moreover, a form of the computer program product implemented on one or more computer available storage media (including, but are not limited to, a disk memory, an optical memory and the like) containing computer available program codes may be adopted in the disclosure.

The disclosure is described with reference to flow charts and/or block diagrams of the method, the device (system) and the computer program product according to the embodiments of the disclosure. It will be appreciated that each flow and/or block in the flow charts and/or the block diagrams and a combination of the flows and/or the blocks in the flow charts and/or the block diagrams may be implemented by computer program instructions. These computer program instructions may be provided for a general computer, a dedicated computer, an embedded processor or processors of other programmable data processing devices to generate a machine, such that an apparatus for implementing functions designated in one or more flows of the flow charts and/or one or more blocks of the block diagrams is generated via instructions executed by the computers or the processors of the other programmable data processing devices.

These computer program instructions may also be stored in a computer readable memory capable of guiding the computers or the other programmable data processing devices to work in a specific mode, such that a manufactured product including an instruction apparatus is generated via the instructions stored in the computer readable memory, and the instruction apparatus implements the functions designated in one or more flows of the flow charts and/or one or more blocks of the block diagrams.

These computer program instructions may also be loaded to the computers or the other programmable data processing devices, such that processing implemented by the computers is generated by executing a series of operation steps on the computers or the other programmable devices, and therefore the instructions executed on the computers or the other programmable devices provide a step of implementing the functions designated in one or more flows of the flow charts and/or one or more blocks of the block diagrams.

The above is only the preferred embodiments of the disclosure and is not used to limit the protection scope of the disclosure.

### INDUSTRIAL APPLICABILITY

In the embodiments of the disclosure, a configuration node groups and initially configures communication stations for which spectrum resources need to be dynamically allocated, such that the communication stations for which spectrum resources need to be dynamically allocated are configured with spectrum resources in more detail according to own grouping and initial configuration conditions, thereby finally obtaining spectrum parameters, solving the problem about coexistence between the communication stations, and avoiding interference between the communication stations.

## Claims

1. A spectrum management method, comprising:
clustering, by a configuration node, a communication station according to a division rule;
configuring, by the configuration node, a corresponding initial spectrum parameter for the communication station, the initial spectrum parameter satisfying a coexistence condition between the communication station and communication stations in other communication station clusters; and
sending, by the configuration node, the initial spectrum parameter and a clustering result, the initial spectrum parameter and the clustering result being configured to determine, by the communication station, an own final spectrum parameter.

2. The method according to claim 1, wherein configuring, by the configuration node, the corresponding initial spectrum parameter for the communication station comprises:
configuring, by the configuration node, the initial spectrum parameter satisfying the coexistence condition for the communication station according to a device parameter of the communication station and device parameters and spectrum use information of the communication stations in other communication station clusters.

3. The method according to claim 1, wherein configuring, by the configuration node, the corresponding initial spectrum parameter for the communication station comprises:
sending, by the configuration node, an available spectrum resource request to a spectrum management node, the available spectrum resource request being configured to determine, by the spectrum management node, an available spectrum and limit information about the available spectrum for the communication station;
receiving, by the configuration node, the available spectrum and the limit information about the available spectrum, determined by the spectrum management node; and
configuring, by the configuration node, the initial spectrum parameter satisfying the coexistence condition for the communication station according to the available spectrum, the limit information about the available spectrum, and the device parameters and spectrum use information of the communication stations in other communication station clusters; or negotiating, by the configuration node, with other configuration nodes adjacent thereto according to the available spectrum, so as to obtain a new available spectrum and limit information about the new available spectrum within a range of the available spectrum, and then configuring the initial spectrum parameter satisfying the coexistence condition for the communication station according to the new available spectrum, the limit information about the new available spectrum, and the device parameters and spectrum use information of the communication stations in other communication station clusters.

4. The method according to claim 3, wherein after the configuration node sends the initial spectrum parameter and the clustering result, the method further comprises:
receiving, by the configuration node, a configuration feedback message; and
sending, by the configuration node, the configuration feedback message to the spectrum management node, the configuration feedback message comprising a final spectrum parameter of the communication station, and being configured to configure, by the configuration node, initial spectrum parameters for other communication stations subsequently and to provide, by the spectrum management node, the basis for subsequently determining available spectra.

5. The method according to any one of claims 1 to 4, wherein the coexistence condition comprises: mutual non-interference between communication stations of different communication station clusters, or interference between communication stations of different communication station clusters within a set range.

6. The method according to claim 1, wherein the clustering result comprises at least one of the following information: an identifier of a cluster where the communication station is located, an identifier of a cluster head node of a cluster where the communication station is located, identifiers of other communication stations in a cluster where the communication station is located, locations of other communication stations in a cluster where the communication station is located, device types of other communication stations in a cluster where the communication station is located, a coexistence management mode between communication stations in a cluster where the communication station is located, and an allowed frequency range of communication stations in a cluster where the communication station is located, wherein the coexistence management mode between communication stations in a cluster where the communication station is located comprising: one of a distributed negotiation mode between communication stations in a cluster where the communication station is located and a centralized management mode of a cluster head node of a cluster where the communication station is located.

7. A spectrum management method, comprising:
sending, by a communication station, an own device parameter to a configuration node, the device parameter being configured to cluster, by the configuration node, the communication station and to configure a corresponding initial spectrum parameter for the communication station;
receiving, by the communication station, the initial spectrum parameter and a clustering result, sent by the configuration node; and
determining, by the communication station, an own final spectrum parameter according to the initial spectrum parameter and the clustering result.

8. The method according to claim 7, wherein the clustering result comprises at least one of the following information: an identifier of a cluster where the communication station is located, an identifier of a cluster head node of a cluster where the communication station is located, identifiers of other communication stations in a cluster where the communication station is located, locations of other communication stations in a cluster where the communication station is located, device types of other communication stations in a cluster where the communication station is located, a coexistence management mode between communication stations in a cluster where the communication station is located, and an allowed frequency range of communication stations in a cluster where the communication station is located, wherein the coexistence management mode between communication stations in a cluster where the communication station is located comprising: one of a distributed negotiation mode between communication stations in a cluster where the communication station is located and a centralized management mode of a cluster head node of a cluster where the communication station is located.

9. The method according to claim 8, wherein determining, by the communication station, the own final spectrum parameter according to the initial spectrum parameter and the clustering result comprises:
when the coexistence management mode between communication stations in a cluster where the communication station is located is the distributed negotiation mode between communication stations in a cluster where the communication station is located, negotiating, by the communication station, with other communication stations in this cluster according to the initial spectrum parameter and the clustering result, so as to obtain the own final spectrum parameter.

10. The method according to claim 8, wherein determining, by the communication station, the own final spectrum parameter according to the initial spectrum parameter and the clustering result comprises:
when the coexistence management mode between communication stations in a cluster where the communication station is located is the centralized management mode of a cluster head node of a cluster where the communication station is located, sending, by the communication station, the initial spectrum parameter to a cluster head of the own cluster according to the clustering result, in order that the cluster head determines a corresponding final spectrum parameter for the communication station according to the initial spectrum parameter; and
receiving, by the communication station, the final spectrum parameter sent by the cluster head.

11. The method according to any one of claims 7 to 10, wherein after the communication station determines the own final spectrum parameter according to the initial spectrum parameter and the clustering result, the method further comprises:
sending, by the communication station, a configuration feedback message to the configuration node.

12. A configuration node, comprising: a clustering unit, a configuration unit and a sending unit, wherein
the clustering unit is configured to cluster a communication station according to a division rule;
the configuration unit is configured to configure a corresponding initial spectrum parameter for the communication station, the initial spectrum parameter satisfying a coexistence condition between the communication station and communication stations in other communication station clusters; and
the sending unit is configured to send the initial spectrum parameter and a clustering result, the initial spectrum parameter and the clustering result being configured to determine, by the communication station, an own final spectrum parameter.

13. The configuration node according to claim 12, wherein the configuration unit is configured to configure the initial spectrum parameter satisfying the coexistence condition for the communication station according to a device parameter of the communication station and device parameters and spectrum use information of the communication stations in other communication station clusters.

14. The configuration node according to claim 12, wherein the configuration unit comprises:
a sending module, a receiving module and a configuration module, wherein
the sending module is configured to send an available spectrum resource request to a spectrum management node, the available spectrum resource request being configured to determine, by the spectrum management node, an available spectrum and limit information about the available spectrum for the communication station in at least one communication station cluster;
the receiving module is configured to receive the available spectrum and the limit information about the available spectrum, determined by the spectrum management node; and
the configuration module is configured to: configure the initial spectrum parameter satisfying the coexistence condition for the communication station according to the available spectrum, the limit information about the available spectrum, and the device parameters and spectrum use information of the communication stations in other communication station clusters;
or, negotiate with other configuration nodes adjacent thereto according to the available spectrum, so as to obtain a new available spectrum and limit information about the new available spectrum within a range of the available spectrum, and then configure the initial spectrum parameter satisfying the coexistence condition for the communication station according to the new available spectrum, the limit information about the new available spectrum, and the device parameters and spectrum use information of the communication stations in other communication station clusters.

15. The configuration node according to claim 14, wherein
the receiving unit is further configured to receive a configuration feedback message; and
the sending unit is further configured to send the configuration feedback message to the spectrum management node, the configuration feedback message comprising a final spectrum parameter of the communication station, and being configured to configure, by the configuration node, initial spectrum parameters for other communication stations subsequently and to provide, by the spectrum management node, the basis for subsequently determining available spectra.

16. The configuration node according to any one of claims 12 to 15, wherein the coexistence condition comprises: mutual non-interference between communication stations of different communication station clusters, or interference between communication stations of different communication station clusters within a set range.

17. The configuration node according to claim 12, wherein the clustering result comprises at least one of the following information: an identifier of a cluster where the communication station is located, an identifier of a cluster head node of a cluster where the communication station is located, identifiers of other communication stations in a cluster where the communication station is located, locations of other communication stations in a cluster where the communication station is located, device types of other communication stations in a cluster where the communication station is located, a coexistence management mode between communication stations in a cluster where the communication station is located, and an allowed frequency range of communication stations in a cluster where the communication station is located, wherein the coexistence management mode between communication stations in a cluster where the communication station is located comprising: one of a distributed negotiation mode between communication stations in a cluster where the communication station is located and a centralized management mode of a cluster head node of a cluster where the communication station is located.

18. A communication station, comprising: a sending unit, a receiving unit and a determination unit, wherein
the sending unit is configured to send an own device parameter to a configuration node, the device parameter being configured to cluster, by the configuration node, the communication station and to configure a corresponding initial spectrum parameter for the communication station;
the receiving unit is configured to receive the initial spectrum parameter and a clustering result, sent by the configuration node; and
the determination unit is configured to determine an own final spectrum parameter according to the initial spectrum parameter and the clustering result.

19. The communication station according to claim 18, wherein the clustering result comprises at least one of the following information: an identifier of a cluster where the communication station is located, an identifier of a cluster head node of a cluster where the communication station is located, identifiers of other communication stations in a cluster where the communication station is located, locations of other communication stations in a cluster where the communication station is located, device types of other communication stations in a cluster where the communication station is located, a coexistence management mode between communication stations in a cluster where the communication station is located, and an allowed frequency range of communication stations in a cluster where the communication station is located, wherein the coexistence management mode between communication stations in a cluster where the communication station is located comprising: one of a distributed negotiation mode between communication stations in a cluster where the communication station is located and a centralized management mode of a cluster head node of a cluster where the communication station is located.

20. The communication station according to claim 19, wherein the determination unit is configured to negotiate, when the coexistence management mode between communication stations in a cluster where the communication station is located is the distributed negotiation mode between communication stations in a cluster where the communication station is located, with other communication stations in this cluster according to the initial spectrum parameter and the clustering result, so as to obtain the own final spectrum parameter.

21. The communication station according to claim 19, wherein the determination unit is configured to send, when the coexistence management mode between communication stations in a cluster where the communication station is located is the centralized management mode of a cluster head node of a cluster where the communication station is located, the initial spectrum parameter to a cluster head node of the own cluster according to the clustering result, in order that the cluster head node determines a corresponding final spectrum parameter for the communication station according to the initial spectrum parameter; and
the receiving unit is further configured to receive the final spectrum parameter sent by the cluster head node.

22. The communication station according to any one of claims 18 to 21, wherein the sending unit is further configured to send a configuration feedback message to the configuration node.

23. A spectrum management system, comprising a configuration node and a communication station, wherein
the configuration node is configured to: cluster a communication station according to a division rule; configure a corresponding initial spectrum parameter for the communication station, the initial spectrum parameter satisfying a coexistence condition between the communication station and communication stations in other communication station clusters; and send the initial spectrum parameter and a clustering result; and
the configuration station is configured to: send an own device parameter to a configuration node, the device parameter being configured to cluster, by the configuration node, the communication station and to configure a corresponding initial spectrum parameter for the communication station; receive the initial spectrum parameter and a clustering result, sent by the configuration node; and determine an own final spectrum parameter according to the initial spectrum parameter and the clustering result.

24. A computer storage medium, a computer executable instruction being stored in the computer storage medium, wherein the computer executable instruction is configured to execute the spectrum management method according to any one of claims 1 to 6.

25. A computer storage medium, a computer executable instruction being stored in the computer storage medium, wherein the computer executable instruction is configured to execute the spectrum management method according to any one of claims 7 to 11.
